(19) Europäisches Patentamt
European Patent Office
Office européen des brevets

(11) EP 2 002 955 A2

(12) EUROPEAN PATENT APPLICATION
published in accordance with Art. 153(4) EPC

(43) Date of publication:
**17.12.2008 Bulletin 2008/51**

(21) Application number: **07738520.1**

(22) Date of filing: **14.03.2007**

(51) Int Cl.:
***B29C 45/00*** (2006.01) ***C08F 10/02*** (2006.01)
***C08L 23/00*** (2006.01) ***C08L 23/04*** (2006.01)
***C08L 23/10*** (2006.01) ***B29K 23/00*** (2006.01)
***B29K 91/00*** (2006.01)

(86) International application number:
**PCT/JP2007/055049**

(87) International publication number:
**WO 2007/114009 (11.10.2007 Gazette 2007/41)**

(84) Designated Contracting States:
**DE**

(30) Priority: **30.03.2006 JP 2006095417**
**30.03.2006 JP 2006095418**
**30.03.2006 JP 2006095421**
**31.03.2006 JP 2006099462**

(71) Applicant: **Mitsui Chemicals, Inc.**
**Tokyo 105-7117 (JP)**

(72) Inventors:
- **UOSAKI, Hirotaka**
**Sodegaura-shi, Chiba 299-0265 (JP)**
- **KAWABE, Kuniaki**
**Sodegaura-shi, Chiba 299-0265 (JP)**
- **YASUI, Motoyasu**
**Sodegaura-shi, Chiba 299-0265 (JP)**
- **NAKAMURA, Hideo**
**Koga City, Ibaraki 306-0213 (JP)**
- **AMADA, Yasushi**
**Chuo-ku, Tokyo 104-0031 (JP)**

(74) Representative: **HOFFMANN EITLE**
**Patent- und Rechtsanwälte**
**Arabellastrasse 4**
**81925 München (DE)**

# (54) PROCESS FOR PRODUCING MOLDED OBJECT BY INJECTION MOLDING

(57) The present invention is to provide a method for producing a molded article by injection molding of a mixture containing a polyolefin resin (A) and a polyethylene wax (B) having the density of 890 to 980 ($kg/m^3$) as measured by a density gradient tube method in accordance with JIS K7112 and the number average molecular weight (Mn) of 500 to 4,000 in terms of polyethylene as measured by gel permeation chromatography (GPC) and satisfying the relationship shown by the following expression (I):

$$B \leq 0.0075 \times K \ldots (I),$$

(In the formula (I), B is the content ratio (% by weight) of components having the molecular weight of 20, 000 or more in terms of polyethylene in the polyethylene wax as measured by gel permeation chromatography, and K is the melt viscosity (mPa·s) of the polyethylene wax at 140°C).

According to the present invention, a method for producing an injection molding of polyethylene, in which the resin scorch is prevented and the cooling time after the injection is shortened in an injection molding of a polyolefin resin; and a method for producing a molded article of a polyolefin resin, in which the productivity is improved without impairing the moldablitity at the time of injection molding and the physical properties inherent to the polyolefin resin are not impaired, are provided.

EP 2 002 955 A2

## Description

[Technical Field]

The present invention relates to a method for producing a molded article by injection molding, and more specifically a method for producing a molded article by injection molding by using a polyolefin resin and a specific polyethylene wax as the raw materials.

[Background Art]

Thermoplastic resins such as polyethylene, polypropylene, and the like are those which are plasticized by heating and thereby fluidized, and produce many kinds of molded article by various molding methods, for instance, by injection molding. Also, many kinds of molded articles are produced from a polypropylene resin mixture in which an olefinic elastomer is added to polypropylene, by various molding methods, for instance, by injection molding. These molded articles are used in many applications.

Generally, when a thermoplastic resin is prepared by injection molding, in order to prevent a short shot from occurring, the thermoplastic resin is required to have sufficient fluidity. Further, in recent years, it has been more and more required strongly to improve the productivity in the injection molding.

As a general method to improve the productivity at the time of molding such as an injection molding and the like by providing sufficient fluidity to a thermoplastic resin, a method for molding a thermoplastic resin by adding a plasticizer and a lubricant has been known. For example, a method for molding a thermoplastic resin by applying a molding adjuvant agent such as an oil, a polyethylene wax, and the like has been studied (for example, refer to the Patent Documents 1 and 2). However, even if a thermoplastic resin such as polyethylene and the like is prepared by injection molding by using a conventional molding adjuvant agent, in the obtained molded product, physical properties, for instance, mechanical strength, heat resistance, impact resistance, and thermal distortion may be deteriorated, although the moldability itself tends to improve.

On the other hand, as a method without using a plasticizer and a lubricant, a method of an injection molding by raising the molding temperature high enough to fully plasticize a thermoplastic resin has been known. This method, however, had problems of the resin scorch, deterioration by heating, and the like, due to the high molding temperature. In addition, in the case of continuous injection molding, since it is required to cool the mold, when the molding temperature is high, it takes long time for cooling, therefore there remains a problem of decreased productivity. Accordingly, in the past, in order to shorten the cooling time, a measure to increase the capacity of a cooling equipment and the like has been employed, but an additional investment in facilities is required, and therefore it is not economically preferable.

[Patent Document 1] Japanese Patent Application Publication No. H05(1993)-80492
[Patent Document 2] Japanese Patent Application Laid-Open No. 2003-528948

[Disclosure of the Invention]

[Problems to be Solved by the Invention]

The present invention intends to solve the problems in the conventional art as mentioned above, and has objectives, in an injection molding of a polyolefin resin, a method for injection molding of polyethylene, polypropylene, or a mixture of polypropylene and an olefinic elastomer, which prevent resin scorch and shortens the cooling time after the injection, and a method for producing a molded article of the polyolefin resin that improves the productivity without impairing the moldability at the time of injection molding and physical properties inherent in the polyolefin resins, for instance mechanical properties, thermal distortion and the like are not impaired, are provided.

[Means for Solving the Problems]

The present inventors investigated thoroughly to solve the problems, and as a result, found that when the injection molding was carried out by using a polyolefin resin and a specific polyethylene wax as raw materials, the injection molding was carried out at lower temperature than that in conventional methods, and a molded article having physical properties equivalent to those of the molded article obtained without using a plasticizer such as a lubricant and the like was obtained, and that the productivity was improved without impairing the moldability and the physical properties of the obtained molded article was not impaired. Based on these findings, the present invention has been accomplished.

Namely, a method for producing a molded article by injection molding according to the present invention is characterized in that a mixture containing a polyolefin resin (A) and a polyethylene wax (B) having the density of 890 to

980 (kg/m$^3$) as measured by the density gradient tube method in accordance with JIS K7112 and the number average molecular weight (Mn) of 500 to 4,000 in terms of polyethylene as measured by gel permeation chromatography (GPC) and satisfying the relationship shown by the following expression (I) is injection molded.

$$B \leq 0.0075 \times K \ldots \text{(I)}$$

(In the formula (I), B is the content ratio (% by weight) of components having the molecular weight of 20, 000 or more in terms of polyethylene in the polyethylene wax as measured by gel permeation chromatography, and K is the melt viscosity (mPa·s) of the polyethylene wax at 140°C.)
Further, it is preferable that the polyethylene wax (B) satisfies the relationship shown by the following expression (II).

$$A \leq 230 \times K^{(-0.537)} \ldots \text{(II)}$$

(In the formula (II), A is the content ratio (% by weight) of components having the molecular weight of 1,000 or less in terms of polyethylene in the polyethylene wax as measured by gel permeation chromatography, and K is the melt viscosity (mPa·s) of the polyethylene wax at 140°C.)
One preferred embodiment of the present invention is that the polyolefin resin (A) is polyethylene having the density of 900 (kg/m$^3$) or more to less than 940 (kg/m$^3$) as measured by a density gradient tube method in accordance with JIS K7112 and an MI of 0.01 to 100 g/10 min as measured at 190°C under the test load of 21.18 N in accordance with JIS K7210.

It is preferable that, when the polyolefin resin (A) is polyethylene having the density of 940 to 980 (kg/m$^3$) as measured by a density gradient tube method in accordance with JIS K7112 and an MI of 0.01 to 100 g/10 min as measured at 190°C under the test load of 21.18 N in accordance with JIS K7210, the number average molecular weight (Mn) of the polyethylene wax (B) is 500 to 3,000 in terms of polyethylene as measured by gel permeation chromatography (GPC).

One preferable embodiment of the present invention is that the polyolefin resin (A) is polypropylene.

One preferable embodiment of the present invention is that the polyolefin resin (A) is a resin mixture containing 55 to 95% by weight of polypropylene and 5 to 45% by weight of an olefinic elastomer based on 100% by weight of the total of the polypropylene and the olefinic elastomer.

It is preferable that 0.01 to 10 parts by weight of the polyethylene wax relative to 100 parts by weight of the polyethylene are contained in a mixture containing the polyolefin resin (A) and the polyethylene wax (B).

[Effects of the Invention]

According to the present invention, the fluidity of a polyolefin resin is secured even at low temperature by adding a polyethylene wax. As a result, the injection molding at low temperature may be carried out, thereby enabling to prevent the resin scorch at the time of injection molding from occurring. Further, since it has sufficient fluidity at lower molding temperature as compared with the case without containing the polyethylene wax, the resin may be fully filled to the narrow ends of mold, and a short shot may be prevented from occurring. In addition, the decrease in characteristics in the obtained molded article was not observed. Further, as the molding temperature is low, the time for cooling the mold may be shortened, and the molding cycle may be increased and thus the productivity may be improved in an existing plant.

Further, according to the production method of molded article of the present invention, the moldability at the time of the injection molding of a polyolefin resin is not impaired, and the productivity is excellent. In a polyolefin resin molded article obtained by the injection molding, the physical properties inherent in the polyolefin resin are not impaired.

[Best Mode for Carrying Out the Invention]

In the following, the present invention will be explained in detail.

Firstly, the raw materials used in the injection molding of the present invention will be explained.

[Polyolefin resin (A)]

In the present invention, the polyolefin resin refers to a homopolymer of an olefin or a diolefin, a copolymer of an olefin and a diolefin, and a mixture of these polymers. As this polyolefin resin, there may be mentioned polyethylene,

polypropylene, an olefinic elastomer, a mixture of them, and the like.

The polyolefin resin (A) of the present invention is typically the one which has an MI of 0.01 to 100 g/10 min as measured at 190°C under the test load of 21.18 N in accordance with JIS K7210.

As the polyolefin resin (A), there may be mentioned a homopolymer of ethylene, a copolymer of ethylene and an α-olefin, or a blended product of them, wherein the density is 900 ($kg/m^3$) or more to less than 940 ($kg/m^3$) and an MI of 0.01 to 100 g/10 min as measured at 190°C under the test load of 21.18 N in accordance with JIS K7210 (hereinafter may be referred to as polyethylene (1)).

Further, as the polyolefin resin (A), there may be mentioned a homopolymer of ethylene, a copolymer of ethylene and an α-olefin, or a blended product of them, wherein the density is 940 to 980 ($kg/m^3$) and an MI of 0.01 to 100 g/10 min as measured at 190°C under the test load of 21.18 N in accordance with JIS K7210 (hereinafter may be referred to as polyethylene (2)).

Further, as the polyolefin resin (A), polypropylene may be mentioned.

Further, as the polyolefin resin (A), a resin mixture of polypropylene and an olefinic elastomer is mentioned (hereinafter may be referred to as polypropylene resin mixture (1)). In the following, these will be explained more particularly.

[Polyethylene (1)]

In the present invention, polyethylene means a homopolymer of ethylene, a copolymer of ethylene and a small amount of an α-olefin, or a mixture of them, wherein the MI of them is 0.01 to 100 g/10 min as measured at 190°C under the test load of 21.18 N in accordance with JIS K7210.

As the polyethylene (1) used in the present invention, there is no particular restriction as long as the density is 900 ($kg/m^3$) or more to less than 940 ($kg/m^3$). Specifically, there may be mentioned a low-density polyethylene, a medium-density polyethylene, a linear low-density polyethylene, an ultra low-density polyethylene, or a blended product of them.

In the present invention, measurement conditions of MI and the density of polyethylene are as follows.

(MI)

The MI was measured at 190°C under the test load of 21.18 N in accordance with JIS K7210.

(Density)

The density was measured by the density gradient tube method in accordance with JIS K7112.

Further, as mentioned above, the density of the polyethylene (1) is 900 ($kg/m^3$) or more to less than 940 ($kg/m^3$), but preferably 900 to 930 ($kg/m^3$).

When the density of the polyethylene (1) is in the above range, a molded article obtained therefrom is excellent in feeling, rigidity, impact resistance, and chemicals-resistance.

Further, an MI of the polyethylene (1) is preferably 0.1 to 30.0 g/10 min, and more preferably 0.5 to 15.0 g/10 min. When the MI of the polyethylene is in the above range, not only the balance between moldability and mechanical strength is excellent, but also a molded article having excellent feeling, rigidity, impact resistance, and chemicals-resistance may be obtained.

There is no particular restriction in the shape of the polyethylene (1), and it is usually particles in pellets or in tablets.

[Polyethylene (2)]

As the polyethylene (2) used in the present invention, there is no particular restriction as long as the density is 940 to 980 ($kg/m^3$). Specifically a high-density polyethylene or the blended product may be mentioned.

Further, as mentioned above, the density of the polyethylene (2) is 940 to 980 ($kg/m^3$), and preferably 950 to 980 ($kg/m^3$).

When the density of the polyethylene (2) is within the above range, a molded article obtained therefrom is excellent in feeling, rigidity, impact resistance, and chemicals-resistance.

Further, an MI of the polyethylene (2) is preferably 0.1 to 30.0 g/10 min and more preferably 0.5 to 15.0 g/10 min. When the MI of the polyethylene is within the above range, not only the balance between moldability and mechanical strength is excellent, but also a molded article having excellent feeling, rigidity, impact resistance, and chemicals-resistance may be obtained.

There is no particular restriction in the shape of the polyethylene (2), and it is usually particles in pellets or in tablets.

[Polypropylene]

In the present invention, polypropylene means a homopolymer of propylene, a copolymer of propylene and an α-olefin (other than propylene), or a blended product of them, wherein the MI of them is 0.01 to 100 g/10 min as measured at 230°C under the test load of 21.18 N in accordance with JIS K7210. The specific example of the polypropylene includes a propylene homopolymer, a polypropylene block copolymer of propylene and an α-olefin (other than propylene), a polypropylene random copolymer, or a blended product of them.
In the present invention, the measurement conditions of the MI of polypropylene are as following.

(MI)

The MI was measured at 230°C under the test load of 21.18 N in accordance with JIS K7210.
Further, an MI of the polypropylene is preferably 1.0 to 50.0 g/10 min, and more preferably 10.0 to 30.0 g/10 min. When the MI of the polypropylene is in the above range, not only the balance between moldability and mechanical strength is excellent, but also a molded article having excellent feeling, rigidity, impact resistance, and chemicals-resistance may be obtained.
There is no particular restriction in the shape of the polypropylene, and it is usually particles in pellets or in tablets.

[Polypropylene resin mixture (1)]

The polypropylene resin mixture (1) of the present invention is a resin mixture of polypropylene and an olefinic elastomer.
The polypropylene blended in the polypropylene resin mixture (1) is the same as the polypropylene, and usually the density as measured in accordance with the density gradient tube method of JIS K7112 is 910 ($kg/m^3$) or more.
The polypropylene resin mixture (1) is blended with an olefinic elastomer, and the olefinic elastomer of the present invention is an ethylene-α-olefin random copolymer whose MI as measured at 190°C under the test load of 21.18 N in accordance with JIS K7210 is 0.01 to 100 g/10 min and density as measured by the density gradient tube method in accordance with JIS K7112 is 850 ($kg/m^3$) or more to less than 900 ($kg/m^3$); a propylene-α-olefin random copolymer, prepared by copolymerizing propylene and an α-olefin having 4 or more carbon atoms, whose MI as measured at 230°C under the test load of 21.18 N in accordance with JIS K7210 is 0.01 to 100 g/10 min and density as measured by the density gradient tube method in accordance with JIS K7112 is 850 ($kg/m^3$) or more to less than 910 ($kg/m^3$); an ethylene/α-olefin/non-conjugated polyene random copolymer whose MI as measured at 190°C under the test load of 21.18 N in accordance with JIS K7210 is 0.01 to 100 g/10 min and density as measured by the density gradient tube method in accordance with JIS K7112 is 850 ($kg/m^3$) or more to less than 900 ($kg/m^3$); and a mixture of them.
The ethylene-α-olefin random copolymer is usually a random copolymer of ethylene and an α-olefin having 3 to 20 carbon atoms, and is a rubber. As the α-olefin having 3 to 20 carbon atoms, there may be mentioned propylene, 1-butene, 1-pentene, 1-hexene, 4-methyl-1-pentene, 1-heptene, 1-octene, 1-decene, 1-dodecene, 1-tetradecene, 1-hexadecene, 1-eicocene, and the like. Among these α-olefins, propylene, 1-butene, 1-hexene, and 1-octene are preferable. These α-olefins may be used alone or in a combination of two or more kinds.
The ethylene-α-olefin copolymer is usually a polymer obtained by copolymerizing 90 to 50 mol % of ethylene and 10 to 50 mol % of an α-olefin.
Also, the MI (measured by JIS K7210 at 190°C under the test load of 21.18 N) is preferably 0.3 to 20 g/10 min. When the MI is in this range, a molded article having a good balance between moldability and mechanical strength may be obtained.
The propylene-α-olefin random copolymer is usually a random copolymer of propylene and an α-olefin having 4 to 20 carbon atoms, and is a rubber. As the α-olefin having 4 to 20 carbon atoms, there may be mentioned 1-butene, 1-pentene, 1-hexene, 4-methyl-1-pentene, 1-heptene, 1-octene, 1-decene, 1-dodecene, 1-tetradecene, 1-hexadecene, 1-eicocene, and the like. These α-olefins may be used alone or in a combination of two or more kinds.
The propylene-α-olefin random copolymer is usually a polymer obtained by copolymerizing 90 to 55 mol % of propylene and 10 to 45 mol % of an α-olefin.
Also, the MI (measured by JIS K7210 at 230°C under the test load of 21.18 N) is preferably 0.3 to 20 g/10 min. When the MI is in this range, a molded article having a good balance between moldability and mechanical strength may be obtained.
The ethylene/α-olefin/non-conjugated polyene random copolymer is usually a random copolymer of ethylene, an α-olefin having 3 to 20 carbon atoms and a non-conjugated polyene, and is a rubber. The α-olefin is the same as that in the case of the ethylene-α-olefin random copolymer.
As the non-conjugated polyene, there may be mentioned non-cyclic diene such as 5-ethylidene-2-norbornene, 5-propylidene-5-norbornene, dicyclopentadiene, 5-vinyl-2-norbornene, 5-methylene-2-norbornene, 5-isopropylidene-2-norbornene, norbornadiene, and the like; chain non-conjugated diene such as 1,4-hexadiene, 4-methyl-1,4-hexadiene, 5-methyl-1,4-hexadiene, 5-methyl-1,5-heptadiene, 6-methyl-1,5-heptadiene, 6-methyl-1,7-octadiene, 7-methyl-1,6-octadiene, and the like; triene such as 2,3-diisopropylidene-5-norbornene, and the like, and others. Among these non-conjugated dienes, 1,4-hexadiene, dicyclopentadiene, and 5-ethylidene-2-norbornene are preferably used.

When the non-conjugated polyene is the above compound, a molded article having excellent impact resistance and mechanical strength may be obtained.

The ethylene/α-olefin/non-conjugated polyene random copolymer is usually a copolymer of 90 to 30 mol % of ethylene, 5 to 45 mol % of an α-olefin, and 5 to 25 mol % of non-conjugated polyene.

Also, the MI (measured at 190°C under the test load of 21.18 N in accordance with JIS K7210) is preferably 0.05 to 100 g/10 min, and more preferably 0.1 to 10 g/10 min. When the MI is in this range, a molded article having a good balance between moldability and mechanical strength may be obtained.

As the ethylene/α-olefin/non-conjugated polyene random copolymer, ethylene/propylene/diene tercopolymer (EPDM) and the like may be mentioned.

The content ratio of polypropylene and olefinic thermoplastic elastomer used as the raw materials in the polypropylene resin mixture (1) is usually 55 to 95% by weight of polypropylene and 5 to 45% by weight of olefinic thermoplastic elastomer, based on 100% by weight of the total of the polypropylene and the olefinic elastomer.

The content ratio is, based on 100% by weight of the total of the polypropylene and the olefinic elastomer, preferably 60 to 90% by weight of polypropylene and 10 to 40% by weight of olefinic elastomer, and more preferably 70 to 90% by weight of polypropylene and 10 to 30% by weight of olefinic elastomer.

When the content ratio of polypropylene and olefinic elastomer is in the above range, a molded article having a good balance between impact resistance and transparency may be obtained.

[Polyethylene wax (B)]

A polyethylene wax in the present invention refers to an ethylene homopolymer, a copolymer of ethylene and a small amount of an α-olefin, or a blended product of them, wherein the number average molecular weight (Mn) is in the range of 500 to 4,000 in terms of polyethylene as measured by gel permeation chromatography (GPC). The number average molecular weight (Mn) of the polyethylene wax in terms of polyethylene was obtained by gel permeation chromatography (GPC) under the following conditions.

(Number average molecular weight (Mn))

The number average molecular weight was obtained by the GPC measurement. The measurement was performed under the following conditions. The number average molecular weight was determined based on the following conversion method by preparing a calibration curve with the use of a commercially available monodisperse polystyrene standard.
Apparatus: Gel Permeation Chromatograph Alliance GPC2000 System (manufactured by Waters Corporation)
Solvent: o-dichlorobenzene
Column: TSK gel column (manufactured by Tosoh Corporation) × 4
Flow rate: 1.0 mL/min
Sample: 0.15 mg/mL o-dichlorobenzene solution
Temperature: 140°C
Molecular weight conversion: In terms of PE/ universal calibration method
In addition, for the calculation of the universal calibration, the following coefficients of the Mark-Houwink viscosity equation were used.
The coefficient of polystyrene (PS): KPS = $1.38\times10^{-4}$, aPS = 0.70
The coefficient of polyethylene (PE) : KPE = $5.06\times10^{-4}$, aPE = 0.70
The polyethylene wax (B) used in the present invention has the density of 890 to 980 (kg/$m^3$). The density of the polyethylene wax was measured by the density gradient tube method in accordance with JIS K7112.

The polyethylene wax (B) of the present invention is characterized in that there is a specific relationship between the molecular weight and the melt viscosity as shown in the following expression (I).

$$B \leq 0.0075\times K \quad \ldots \text{(I)}$$

Here, in the expression (I), B represents a content ratio (% by weight) of the components having the molecular weight of 20,000 or more in terms of polyethylene in the polyethylene wax as measured by gel permeation chromatography. K

represents a melt viscosity (mPa·s) of the polyethylene wax at 140°C as measured by the Brookfield viscometer (B-type).

The polyethylene wax (B) satisfying the expression (I) has good dispersibility with the polyolefin resin (A).

When polyethylene (1), polyethylene (2), or polypropylene is used as the polyolefin resin (A), if such polyethylene wax is used, the fluidity is improved as compared with the one without adding the polyethylene wax, and even if the injection molding is performed at low temperature, an injection-molded article having the same degree of the mechanical properties may be obtained and deterioration of mechanical properties caused by addition of the waxes may be suppressed. Further, this injection-molded article is excellent in the mold-releasability, and the mold fouling may be prevented from occurring. Furthermore, since the injection molding is performed at low molding temperature, the cooling time is shortened, and the molding cycle is improved. Further, by lowering the molding temperature, not only the thermal deterioration of the resin and the reduction of the resin strength but also the resin scorch and the black spots formation may be suppressed.

When the polypropylene resin mixture (1) is used as the polyolefin resin (A), there is a tendency that, by using the polyethylene wax which satisfies the expression (I), the productivity may be improved without impairing the moldability at the time of the injection molding, and further the mechanical properties such as the impact resistance, heat distortion temperature and the like, which are inherent to the polypropylene resin composition composed of polypropylene and olefinic elastomer, are not impaired in the obtained molded article.

In the past, there has been a tendency that, when the injection molding is performed by mixing a polyethylene wax having a low melt viscosity with a polyolefin resin, the viscosity of the entire mixture is decreased, and thus the fluidity and the productivity at the time of molding are improved as compared with the one without adding the polyethylene wax. However, there have been the cases that, even though the productivity and the like are improved, the moldability is impaired, for instance, mold-releasability of an obtained molded article is decreased, mechanical properties are not necessarily sufficient, and thermal distortion properties such as the heat distortion temperature and the like are impaired.

As a result of the investigation by the present inventors, it was found that, in mechanical properties and the like of the molded article obtained by the injection molding, the content ratio of the components having the molecular weight of 20,000 or more in the polyethylene wax to be used is extremely important with regard to the relationship with the melt viscosity. Although the precise mechanism is not clear, it is assumed that, when a polyethylene wax and a polyolefin resin are melt kneaded, the molten behavior of the component having the molecular weight of 20,000 or more is unique in the entire polyethylene wax, and therefore, from the viewpoint of melt viscosity of the entire polyethylene wax, unless the content ratio of the components having the molecular weight of 20,000 or more is kept a certain level or less, the polyethylene wax may not be well dispersed into the polyolefin resin, and the mechanical properties, the thermal distortion properties such as the heat distortion temperature and the like, and the moldability such as mold-releasability and the like are affected in the finally obtained molded article.

The polyethylene wax having the B value in the range may be prepared by using a metallocene catalyst. Among the metallocene catalysts, a metallocene catalyst having a non-bridged ligand is preferable. As such metallocene catalyst, a metallocene compound represented by the general formula (1) which will be described later may be mentioned.

Furthermore, the B value may also be controlled by polymerization temperature. For instance, when a polyethylene wax is prepared by the metallocene catalyst which will be mentioned later, polymerization temperature is usually in the range of 100 to 200°C, and from the viewpoint of preparing the polyethylene wax having the B value, the temperature is preferably in the range of 100 to 180°C and more preferably 100 to 170°C.

In the polyethylene wax (B) of the present invention, there is preferably a specific relationship between the molecular weight and the melt viscosity as shown by the following expression (II).

$$A \leq 230 \times K^{(-0.537)} \quad \ldots \text{(II)}$$

Here, in the expression (II), A represents a content ratio (% by weight) of the components having the molecular weight of 1,000 or less in terms of polyethylene in the polyethylene wax as measured by gel permeation chromatography, and K represents the a melt viscosity (mPa·s) of the polyethylene wax at 140°C.

When polyethylene (1), polyethylene (2), or polypropylene is used as the polyolefin resin (A), there are tendencies that the molded article obtained by using the polyethylene wax satisfying the expression (II) has the same degree of mechanical properties as the one obtained without adding the polyethylene wax, and that bleed-out from the molded article surface is decreased. Further, this injection-molded article is excellent in the mold-releasability, and the mold fouling may be prevented from occurring. Furthermore, since the injection molding is performed at low temperature, the cooling time is shortened, and the molding cycle is improved. Further, by lowering the molding temperature, not only the thermal deterioration of the resin and the reduction of the resin strength but also the resin scorch and the black spots formation may be suppressed.

When the polypropylene resin mixture (1) is used as the polyolefin resin (A), there are tendencies that, by using

the polyethylene wax which satisfies the expression (It), the productivity at the time of the injection molding is improved and the moldability is not impaired, and further, in the obtained molded article, the mechanical characteristics such as tensile characteristics, flexural characteristics, impact resistance and the like, or the thermal distortion property such as the heat distortion temperature and the like, which are inherent to the polypropylene resin composition composed of polypropylene and olefinic elastomer, are not impaired, and in addition, that the bleed-out from the molded article surface is decreased.

As mentioned above, there is a tendency that, when the injection molding is performed by mixing a polyethylene wax having a low melt viscosity with polyethylene, the viscosity of the entire mixture is decreased, and thus the fluidity and the productivity are improved as compared with the one without adding the polyethylene wax. However, there have been the cases that, even if the productivity is thus improved, the mold-releasability of the obtained molded article is decreased, the mechanical property is impaired, and the bleed-out from the molded article surface becomes a problem.

As a result of the investigation by the present inventors, it was found that, in the mechanical properties of the molded article obtained by the injection molding, the content ratio of the components having the molecular weight of 1,000 or less in the polyethylene wax to be used is extremely important with regard to the relationship with the melt viscosity. Although the precise mechanism is not clear, it is assumed that, when a polyethylene wax and a polyolefin resin are melt kneaded, the components having the molecular weight of 1,000 or less are easily melted and the molten behavior of the components is unique in the entire polyethylene wax, and therefore, from the viewpoint of the melt viscosity of the entire polyethylene wax, unless the content ratio of the components having the molecular weight of 1,000 or less is kept a certain level or less, it may ooze out to a surface, and the deterioration and the like may be caused in some cases, and the mechanical properties and the bleed-out are affected in the finally obtained molded article.

The polyethylene wax having the A value in the range may be prepared by using a metallocene catalyst. Among the metallocene catalysts, a metallocene catalyst having a non-bridged ligand is preferable. As such a metallocene catalyst, a metallocene compound represented by the general formula (1) which will be described later may be mentioned.

Furthermore, the A value may also be controlled by polymerization temperature. For instance, when a polyethylene wax is prepared by using a metallocene catalyst which will be mentioned later, polymerization temperature is usually in the range of 100 to 200°C, and from the viewpoint of preparing the polyethylene wax having the A value, the temperature is preferably 100 to 180°C and more preferably 100 to 170°C.

The number average molecular weight (Mn) of the polyethylene wax (B) is in the range of 500 to 4,000.

When the polyethylene (1) is used as the polyolefin resin (A), the number average molecular weight (Mn) of the polyethylene wax (B) is preferably 1,000 to 3,800 and in particular 2,000 to 3,500. When the number average molecular weight (Mn) of the polyethylene wax is in the above range, there is a tendency that the dispersion of the polyethylene wax into the polyethylene (1) is more improved.

When the polyethylene (2) is used as the polyolefin resin (A), the number average molecular weight (Mn) of the polyethylene wax (B) is preferably 500 to 3, 000, more preferably 800 to 2, 800, and far more preferably 1,000 to 2,500. When the number average molecular weight (Mn) of the polyethylene wax is in the above range, there is a tendency that the dispersion of the polyethylene wax into the polyethylene is more improved.

When polypropylene is used as the polyolefin resin (A), the number average molecular weight (Mn) of the polyethylene wax (B) is preferably 1,000 to 3,800, and particularly preferably 1,500 to 3,500. When the number average molecular weight (Mn) of the polyethylene wax is in the above range, there is a tendency that the dispersion of the polyethylene wax into the polypropylene is more improved.

The Mn of the polyethylene wax may be controlled by polymerization temperature and the like. For instance, when the polyethylene wax is prepared by a metallocene catalyst which will be mentioned later, polymerization temperature is usually in the range of 100 to 200°C, and from the viewpoint of preparing the polyethylene wax having the Mn in the preferable range, the polymerization temperature is preferably in the range of 100 to 180°C and more preferably 100 to 170°C.

The density (D: (kg/$m^3$) of the polyethylene wax (B) is in the range of 890 to 980 (kg/$m^3$).

When the polyethylene (1) is used as the polyolefin resin (A), the density of the polyethylene wax (B) is preferably 895 to 960 (kg/$m^3$) and more preferably 900 to 940 (kg/$m^3$). When the density (D) of the polyethylene wax is in the above range, there is a tendency that the dispersion of the polyethylene wax into the polyethylene (1) is more improved.

When the polyethylene (2) is used as the polyolefin resin (A), the density of the polyethylene wax (B) is preferably 920 to 980 (kg/$m^3$), and more preferably 950 to 980 (kg/$m^3$). When the density (D) of the polyethylene wax is in the above range, there is a tendency that the dispersion of the polyethylene wax into the polyethylene (2) is more improved.

When polypropylene is used as the polyolefin resin (A), the density of the polyethylene wax (B) is preferably 895 to 960 (kg/$m^3$), and more preferably 900 to 940 (kg/$m^3$). When the density (D) of the polyethylene wax is in the above range, there is a tendency that the dispersion of the polyethylene wax into the polypropylene is more improved.

When the polypropylene resin mixture (1) is used as the polyolefin resin (A), the density of the polyethylene wax (B) is preferably 880 to 920 (kg/$m^3$). When the density (D) of the polyethylene wax is in the range, and further, the B value or the relationship of the A value and B value is satisfied, as compared with the polypropylene resin mixture

without adding the wax, there is a tendency that not only the mechanical characteristics such as tensile characteristics, flexural characteristics, and the like, or thermal distortion properties such as the heat distortion temperature and the like are maintained, but also the impact resistance is maintained or increased.

The density of the polyethylene wax is dependent on the number average molecular weight (Mn) of the polyethylene wax when the polyethylene wax is an ethylene homopolymer. For instance, if the molecular weight of the polyethylene wax is lowered, the density of the obtained polymer may be controlled lower. When the polyethylene wax is a copolymer of ethylene and an $\alpha$-olefin, the density of the polyethylene wax is dependent on the weight of the number average molecular weight (Mn) and further may be controlled by the amount of the $\alpha$-olefin relative to ethylene and the kind used at the time of polymerization. For instance, if the amount of the $\alpha$-olefin relative to ethylene is increased, the density of the obtained polymer may be lowered.

From the viewpoint of the density of the polyethylene wax, an ethylene homopolymer, a copolymer of ethylene and an $\alpha$-olefin having 3 to 20 carbon atoms, or a mixture of them are preferable.

As the $\alpha$-olefin used in the preparation of the copolymer of the ethylene and an $\alpha$-olefin having 3 to 20 carbon atoms, an $\alpha$-olefin having 3 to 10 carbon atoms is preferable, and propylene, 1-butene, 1-pentene, 1-hexene, 4-methyl-1-pentene, and 1-octene are more preferable, and propylene, 1-butene, 1-hexene, and 4-methyl-1-pentene are particularly preferable.

The content of the $\alpha$-olefin used in the preparation of the copolymer of the ethylene and an $\alpha$-olefin is preferably in the range of 0 to 20 mol % relative to the total amount of the monomers.

The density of the polyethylene wax may be controlled also by polymerization temperature. For instance, when the polyethylene wax is prepared by a metallocene catalyst which will be mentioned later, the polymerization temperature is usually in the range of 100 to 200°C, and from the viewpoint of preparing the polyethylene wax having the density in the preferable range, the temperature is preferably in the range of 100 to 180°C and more preferably 100 to 170°C.

Such polyethylene waxes are in a solid state at normal temperature and become a low-viscosity liquid at the temperature of 65 to 130°C.

Furthermore, the polyethylene wax satisfies the relationship between the crystallization temperature (Tc: °C) as measured by differential scanning calorimeter (DSC) and the density (D: kg/m$^3$) as measured by the density gradient tube method, preferably represented by the following expression (III),

$$0.501 \times D - 366 \geq Tc \quad \dots \text{(III)},$$

more preferably represented by the following expression (IIIa),

$$0.501 \times D - 366.5 \geq Tc \quad \dots \text{(IIIa)},$$

and further more preferably represented by the following expression (IIIb),

$$0.501 \times D - 367 \geq Tc \quad \dots \text{(IIIb)}.$$

When the crystallization temperature (Tc) and the density (D) in the polyethylene wax satisfy the relationship of the expressions, there is a tendency that the dispersibility of the polyethylene wax into the polyethylene is improved.

The polyethylene wax satisfying the relationship of the expressions may be prepared by using, for example, a metallocene catalyst. Among the metallocene catalysts, a metallocene catalyst having a non-bridged ligand is preferable. As such metallocene catalyst, a metallocene compound represented by the general formula (1) which will be mentioned later may be mentioned.

Furthermore, the polyethylene wax satisfying the relationship of the expressions may also be prepared by controlling the polymerization temperature. For instance, when the polyethylene wax is prepared by the metallocene catalyst which will be mentioned later, the polymerization temperature is usually in the range of 100 to 200°C, and from the viewpoint of preparing the polyethylene wax having the B value, the polymerization temperature is preferably in the range of 100 to 180°C and more preferably 100 to 170°C.

As the suitable metallocene catalyst in the present invention, for example, an olefin polymerization catalyst composed of:

(A) a metallocene compound of a transition metal selected from Group 4 of the periodic table; and
(B) at least one or more kinds of compounds selected from

(b-1) an organoaluminum oxy-compound,
(b-2) a compound forming an ion pair by reacting with the bridged metallocene compound (A), and
(b-3) an organoaluminum compound may be mentioned.

In the following, these compounds will be explained in detail.
<Metallocene compound>

(A) A metallocene compound of a transition metal selected from Group 4 of the periodic table
A metallocene compound forming the metallocene catalyst is a metallocene compound of a transition metal selected from Group 4 of the periodic table, and a compound represented by the following general formula (1) may be mentioned as the specific example.

$$M^1Lx \qquad (1)$$

Here, $M^1$ is a transition metal selected from Group 4 of the periodic table, x is an atomic valency of the transition metal $M^1$, and L is a ligand. The transition metal represented by $M^1$ includes zirconium, titanium, hafnium and the like as an example. L is the ligand coordinating to the transition metal $M^1$, and at least one of the ligands L is the ligand having a cyclopentadienyl skeleton, which may have a substituent. As the ligand L having the cyclopentadienyl skeleton, there may be mentioned, for example, an alkyl- or cycloalkyl-substituted cyclopentadienyl group, such as a cyclopentadienyl group, a methylcyclopentadienyl group, an ethylcyclopentadienyl group, an n- or i-propylcyclopentadienyl group, an n-, i-, sec- or t-butylcyclopentadienyl group, a dimethylcyclopentadienyl group, a methylpropylcyclopentadienyl group, a methylbutylcyclopentadienyl group, a methylbenzylcyclopentadienyl group, and the like; and further an indenyl group, a 4,5,6,7-tetrahydroindenyl group, a fluorenyl group, and others. A hydrogen atom of the ligand having the cyclopentadienyl skeleton may be substituted with a halogen atom, a trialkylsilyl group, or the like.

When the metallocene compound contains two or more ligands having the cyclopentadienyl skeleton as the ligand L, among the ligands, two ligands having the cyclopentadienyl skeletons may be bonded to each other via an alkylene group such as an ethylene group, a propylene group, and the like; via a substituted alkylene group such as an isopropylidene group, a diphenylmethylene group, and the like; a silylene group or a substituted silylene group such as a dimethylsilylene group, a diphenylsilylene group, a methylphenylsilylene group and the like; and others.
As the ligands L (the ligand without having the cyclopentadienyl skeleton) other than the ligand having the cyclopentadienyl skeleton, there may be mentioned a hydrocarbon group having 1 to 12 carbon atoms, an alkoxy group, an aryloxy group, a sulfonate-containing group ($-SO_3R^1$), a halogen atom or a hydrogen atom, and the like (here, $R^1$ is an alkyl group, a halogen-substituted alkyl group, an aryl group, a halogen-substituted aryl group, or an alkyl-substituted aryl group).

<Example of metallocene compound -1>

When the metallocene compound represented by the general formula (1) has a transition metal having the valency of, for example, four, it is represented more specifically by the following general formula (2).

$$R^2{}_kR^3{}_1R^4{}_mR^5{}_nM^1 \qquad (2)$$

Here, $M^1$ is a transition metal selected from Group 4 of the periodic table, $R^2$ is a group (ligand) having a cyclopentadienyl skeleton, $R^3$, $R^4$ and $R^5$ each independently is a group (ligand) having or not having a cyclopentadienyl skeleton. Here, k is an integer of 1 or more, and k + 1 + m + n = 4.
The metallocene compound in which $M^1$ is zirconium and at least two ligands having a cyclopentadienyl skeleton are contained includes, as an example, bis(cyclopentadienyl)zirconium monochloride monohydride, bis(cyclopentadienyl)zirconium dichloride, bis(1-methyl-3-butylcyclopentadienyl)zirconium bis(trifluoromethanesulfonate), bis(1,3-dimethylcyclopentadienyl)zirconium dichloride, and the like.
In the compounds, a compound whose 1,3-substituted cyclopentadienyl group is replaced by a 1,2-substituted cyclopentadienyl group may also be used.
Further, as another example of the metallocene compound, a bridge-type metallocene compound whose at least two of $R^2$, $R^3$, $R^4$ and $R^5$ in the general formula (2), for example, $R^2$ and $R^3$ are a group (ligand) having a cyclopentadienyl skeleton, and at least two of these groups are bonded via an alkylene group, a substituted alkylene group, a silyelene group, or a substituted silylene group, and the like, may also be used. Here, $R^4$ and $R^5$ each is independently the same as the ligand L other than the ligand having the cyclopentadienyl skeleton mentioned above.

As such bridge-type metallocene compound, there may be mentioned ethylenebis(indenyl)dimethylzirconium, ethylenebis(indenyl)zirconium dichloride, isopropylidene(cyclopentadienyl-fluorenyl)zirconium dichloride, diphenylsilylenebis(indenyl)zirconium dichloride, methylphenylsilylenebis(indenyl)zirconium dichloride, and the like.

<Example of metallocene compound -2>

Further, as the example of the metallocene compound, there may be mentioned the metallocene compound represented by the following general formula (3) which is disclosed in the Japanese Patent Laid-Open Publication No. H04-268307.

[Formula 1]

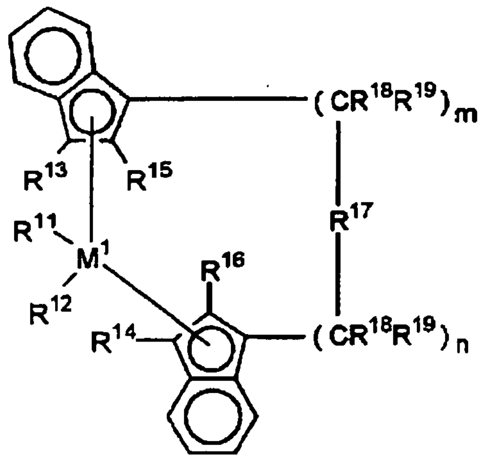

··· (3)

Here, $M^1$ is a transition metal belonging to Group 4 of the periodic table, and specifically titanium, zirconium and hafnium may be mentioned.

$R^{11}$ and $R^{12}$ may be the same or different from each other, and may be a hydrogen atom; an alkyl group having 1 to 10 carbon atoms; an alkoxy group having 1 to 10 carbon atoms; an aryl group having 6 to 10 carbon atoms; an aryloxy group having 6 to 10 carbon atoms; an alkenyl group having 2 to 10 carbon atoms; an arylalkenyl group having 7 to 40 carbon atoms; an alkylaryl group having 7 to 40 carbon atoms; an arylalkenyl group having 8 to 40 carbon atoms; or a halogen atom, and $R^{11}$ and $R^{12}$ are preferably a chlorine atom.

$R^{13}$ and $R^{14}$ may be the same or different from each other, and may be a hydrogen atom; a halogen atom; an alkyl group having 1 to 10 carbon atoms which may be halogenated; an aryl group having 6 to 10 carbon atoms; and a group of $-N(R^{20})_2$,$-SR^{20}$, $-OSi(R^{20})_3$, $-Si(R^{20})_3$, or $-P(R^{20})_2$. Here, $R^{20}$ is a halogen atom, preferably a chlorine atom; an alkyl group having 1 to 10 carbon atoms, preferably 1 to 3 carbon atoms; or an aryl group having 6 to 10 carbon atoms, preferably 6 to 8 carbon atoms. Particularly $R^{13}$ and $R^{14}$ are preferably a hydrogen atom.

$R^{15}$ and $R^{16}$ may be the same as $R^{13}$ and $R^{14}$ except that a hydrogen atom is not contained, and may be the same or different from each other, and preferably the same. $R^{15}$ and $R^{16}$ are preferably an alkyl group having 1 to 4 carbon atoms which may be halogenated, and specifically a methyl group, an ethyl group, a propyl group, an isopropyl group, a butyl group, an isobutyl group, a trifluoromethyl group, and the like are mentioned, and particularly a methyl group is preferable.

In the general formula (3), $R^{17}$ is selected from the following groups,

[Formula 2]

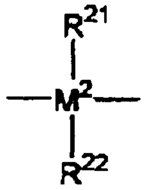 , 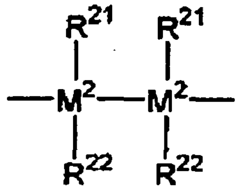 , 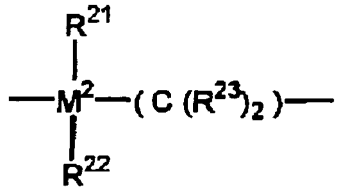 ,

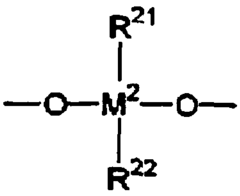 , 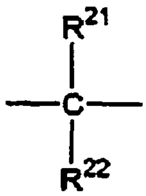 , 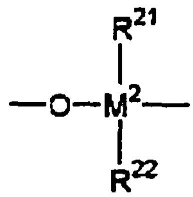 ,

$=BR^{21}$, $=AlR^{21}$, -Ge-, -Sn-, -O-, -S-, =SO, $=SO_2$, $=NR^{21}$, =CO, $=PR^{21}$, $=P(O)R^{21}$, and the like. $M^2$ is silicon, germanium or tin, and preferably silicon or germanium. Here, $R^{21}$, $R^{22}$ and $R^{23}$ may be the same or different from one another, and are a hydrogen atom; a halogen atom; an alkyl group having 1 to 10 carbon atoms; a fluoroalkyl group having 1 to 10 carbon atoms; an aryl group having 6 to 10 carbon atoms; a fluoroaryl group having 6 to 10 carbon atoms; an alkoxy group having 1 to 10 carbon atoms; an alkenyl group having 2 to 10 carbon atoms; an arylalkyl group having 7 to 40 carbon atoms; an arylalkenyl group having 8 to 40 carbon atoms; or an alkylaryl group having 7 to 40 carbon atoms. "$R^{21}$ and $R^{22}$" or "$R^{21}$ and $R^{23}$" may form a ring together with atoms to which they are bonded. Further, $R^{17}$ is preferably $=CR^{21}R^{22}$, $=SiR^{21}R^{22}$, $=GeR^{21}R^{22}$, -O-, -S-, =SO, $=PR^{21}$, or $=P(O)R^{21}$. $R^{18}$ and $R^{19}$ may be the same or different from each other and include the same as that of $R^{21}$. Here, m and n may be the same or different from each other, and they are 0, 1 or 2, and preferably 0 or 1, where m + n = 0, 1 or 2, and preferably 0 or 1.

As the example of the metallocene compound represented by the general formula (3), there may be mentioned rac-ethylene(2-methyl-1-indenyl)$_2$zirconium dichloride, rac-dimethylsilylene(2-methyl-1-indenyl)$_2$zirconium dichloride, and the like. These metallocene compounds may be prepared by, for instance, the method disclosed in the Japanese Patent Laid-Open Publication No. H04-268307.

<Example of metallocene compound -3>

Further, as the metallocene compound, the compound represented by the following general formula (4) may also be used.

[Formula 3]

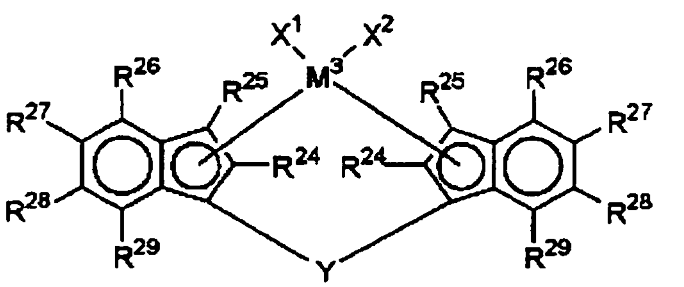 ... (4)

In the formula (4), $M^3$ represents a transition metal belonging to Group 4 of the periodic table, and specifically titanium, zirconium, hafnium and the like. $R^{24}$ and $R^{25}$ may be the same or different from each other, and represent a

hydrogen atom, a halogen atom, a hydrocarbon group having 1 to 20 carbon atoms, a halogenated hydrocarbon group having 1 to 20 carbon atoms, a silicon-containing group, an oxygen-containing group, a sulfur-containing group, a nitrogen-containing group, or a phosphorous-containing group. $R^{24}$ is preferably a hydrocarbon group, and in particular an alkyl group having 1 to 3 carbon atoms such as a methyl group, an ethyl group, or a propyl group. $R^{25}$ is preferably a hydrogen atom or a hydrocarbon group, and in particular preferably a hydrogen atom, or an alkyl group having 1 to 3 carbon atoms such as a methyl group, an ethyl group and a propyl group. $R^{26}$,$R^{27}$, $R^{28}$ and $R^{29}$ may be the same or different from one another, and represent a hydrogen atom, a halogen atom, a hydrocarbon group having 1 to 20 carbon atoms, and a halogenated hydrocarbon group having 1 to 20 carbon atoms. Among them, a hydrogen atom, a hydrocarbon group, or a halogenated hydrocarbon group is preferable. At least one pair selected from "$R^{26}$ and $R^{27}$", "$R^{27}$ and $R^{28}$", and "$R^{28}$ and $R^{29}$" may form a monocyclic aromatic ring together with carbon atoms to which they are bonded. Further, when there are two or more of hydrocarbon groups or halogenated hydrocarbon groups other than the groups that form an aromatic ring, they may be bonded to each other to form a ring. Here, when $R^{29}$ is a substituent other than the aromatic group, it is preferably a hydrogen group. $X^1$ and $X^2$ may be the same or different from each other, and represent a hydrogen atom, a halogen atom, a hydrocarbon group having 1 to 20 carbon atoms, a halogenated hydrocarbon group having 1 to 20 carbon atoms, an oxygen atom-containing group, or a sulfur atom-containing group. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{30}-$, $-P(R^{30})-$, $-P(O)(R^{30})-$, $-BR^{30}-$, or $-AlR^{30}-$ (provided that $R^{30}$ represents a hydrogen atom, a halogen atom, a hydrocarbon group having 1 to 20 carbon atoms, and a halogenated hydrocarbon group having 1 to 20 carbon atoms).

In the formula (4), a monocyclic aromatic ring, which is formed by bonding at least one pair selected from "$R^{26}$ and $R^{21}$", "$R^{27}$ and $R^{28}$", and "$R^{28}$ and $R^{29}$" to each other, is contained. As the ligands coordinating to $M^3$, there may be mentioned those represented by the following formulae, and the like.

[Formula 4]

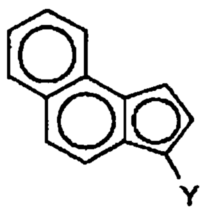

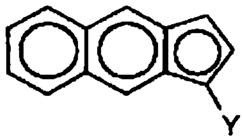

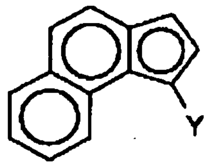

(In the formulae, Y is the same as those explained in the former formula.)

<Example of metallocene compound -4)

As the metallocene compound, the compound represented by the following general formula (5) may also be used.

[Formula 5]

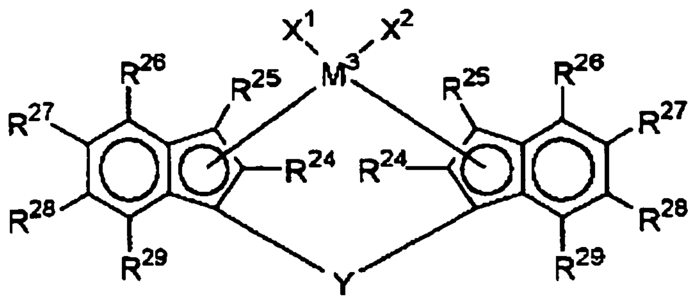

... (5)

In the formula (5), $M^3$, $R^{24}$, $R^{25}$, $R^{26}$, $R^{27}$, $R^{28}$ and $R^{29}$ are the same as those in the general formula (4). Among $R^{26}$, $R^{27}$, $R^{28}$ and $R^{29}$, two groups including $R^{26}$ are preferably an alkyl group, and $R^{26}$ and $R^{28}$, or $R^{28}$ and $R^{29}$ are preferably an alkyl group. This alkyl group is preferably secondary or tertiary alkyl group. Further, this alkyl group may be substituted with a halogen atom or a silicon-containing group, and as the halogen atom or the silicon-containing group, the substituents exemplified in $R^{24}$ and $R^{25}$ may be mentioned. Among $R^{26}$, $R^{27}$, $R^{28}$ and $R^{29}$, the group other than the alkyl group is preferably a hydrogen atom. Further, two groups selected from $R^{26}$, $R^{27}$, $R^{28}$ and $R^{29}$ may be bonded to each other to form a monocyclic or a polycyclic ring other than the aromatic ring. The halogen atom includes the same atoms as mentioned in the $R^{24}$ and $R^{25}$. As $X^1$, $X^2$ and Y, the same atoms and groups as mentioned above are included.

The specific example of the metallocene compound represented by the general formula (5) includes rac-dimethylsilylene-bis(4,7-dimethyl-1-indenyl)zirconium dichloride, rac-dimethylsilylene-bis(2,4,7-trimethyl-1-indenyl)zirconium dichloride, rac-dimethylsilylene-bis(2,4,6-trimethyl-1-indenyl)zirconium dichloride, and the like.

In these compounds, a transition metal compound whose zirconium metal is replaced by a titanium metal or a hafnium metal may also be used. The transition metal compound is usually used as a racemic compound, but an R-form or an S-form may also be used.

<Example of metallocene compound -5>

As the metallocene compound, the compound represented by the following general formula (6) may also be used.

[Formula 6]

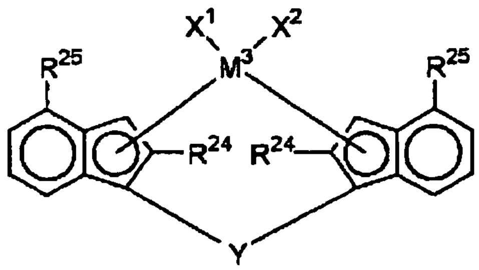

... (6)

In the formula (6), $M^3$, $R^{24}$, $X^1$, $X^2$ and Y are the same as those in the general formula (4). $R^{24}$ is preferably a hydrocarbon group, and particularly preferably an alkyl group having 1 to 4 carbon atoms such as a methyl group, an ethyl group, a propyl group or a butyl group. $R^{25}$ represents an aryl group having 6 to 16 carbon atoms, and is preferably a phenyl group and a naphthyl group. The aryl group may be substituted with a halogen atom, a hydrocarbon group having 1 to 20 carbon atoms, or a halogenated hydrocarbon group having 1 to 20 carbon atoms. As $X^1$ and $X^2$, a halogen atom and a hydrocarbon group having 1 to 20 carbon atoms are preferable.

The specific example of the metallocene compound represented by the general formula (6) includes rac-dimethylsilylene-bis(4-phenyl-1-indenyl)zirconium dichloride, rac-dimethylsilylene-bis(2-methyl-4-phenyl-1-indenyl)zirconiu m dichloride, rac-dimethylsilylene-bis(2-methyl-4-(α-naphthyl)-1-indenyl)zi rconium dichloride, rac-dimethylsilylene-bis(2-methyl-4-(β-naphthyl)-1-indenyl)zi rconium dichloride, rac-dimethylsilylene-bis(2-methyl-4-(1-antholyl)-1-indenyl)zi rconium dichloride, and the like. In these compounds, a transition metal compound whose zirconium metal is replaced by a titanium metal or a hafnium metal may also be used.

<Example of metallocene compound -6>

Further, as the metallocene compound, the compound represented by the following general formula (7) may also be used.

$$LaM^4X^3{}_2 \qquad (7)$$

Here, $M^4$ is a metal belonging to Group 4 or lanthanide series of the periodic table. La is a derivative of a delocalized n bond group and is a group imparting a constraint geometric shape to a metal $M^4$ active site. Each of $X^3$ may be the same or different, and is a hydrogen atom, a halogen atom, a hydrocarbon group having 20 or less carbon atoms, a s ilyl group having 20 or less of silicon atoms, or a germyl group having 20 or less of germanium atoms.
Among them, the compound represented by the following formula (8) is preferable.
[Formula 7]

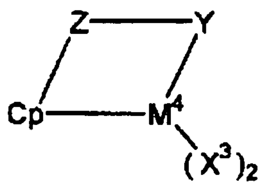

··· (8)

In the formula (8), $M^4$ is titanium, zirconium or hafnium. $X^3$ is the same as that explained in the general formula (7). Cp is n-bonded to $M^4$, and is a substituted cyclopentadienyl group having a substituent Z. Z is oxygen, sulfur, boron, or an element belonging to Group 4 of the periodic table (for instance, silicon, germanium, or tin). Y is a ligand containing nitrogen, phosphorous, oxygen, or sulfur, and may form a condensed ring together with Z. The specific example of the metallocene compound represented by the formula (8) includes (dimethyl(t-butylamide)tetramethyl-$\eta^5$-cyclopentadienyl) silane )titanium dichloride, ((t-butylamide)(tetramethyl-$\eta^5$-cyclopentadienyl)-1,2-ethanedi yl)titanium dichloride, and the like. In these metallocene compounds, a compound whose titanium is replaced by zirconium or hafnium may also be used.

<Example of metallocene compound -7>

Further, as the metallocene compound, the compound represented by the following general formula (9) may also be used.
[Formula 8]

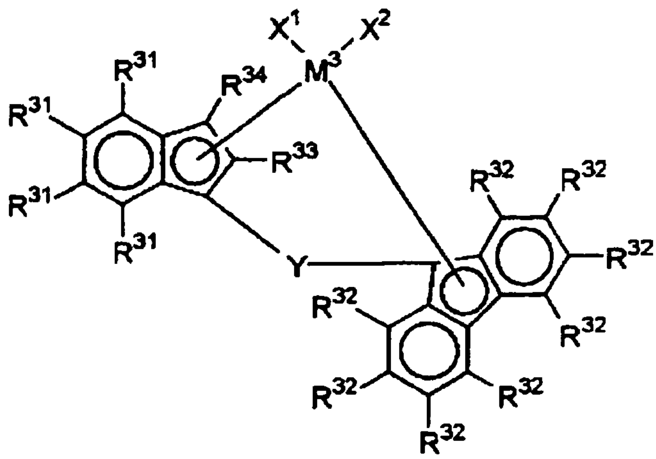

... (9)

In the formula (9), $M^3$ is a transition metal belonging to Group 4 of the periodic table, specifically titanium, zirconium, or hafnium, and preferably zirconium. $R^{31}$ may be the same or different from each other, and at least one of them is an aryl group having 11 to 20 carbon atoms, an arylalkyl group having 12 to 40 carbon atoms, an arylalkenyl group having 13 to 40 carbon atoms, an alkylaryl group having 12 to 40 carbon atoms, or a silicon-containing group; or at least two adjacent groups of the groups shown by $R^{31}$ form single or plural aromatic rings or aliphatic rings together with carbon atoms to which they are bonded. In this case, the ring formed by $R^{31}$ has 4 to 20 carbon atoms as the total including the carbon atoms to which $R^{31}$ is bonded. $R^{31}$ other than the $R^{31}$ that is an aryl group, an aryalkyl group, an arylalkenyl group, an alkylaryl group and that forms an aromatic ring or an aliphatic ring is a hydrogen atom, a halogen atom, an alkyl group having 1 to 10 carbon atoms, or a silicon-containing group. $R^{32}$ may be the same or different from each other, and is a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorous-containing group. Further, at least two adjacent groups of the groups shown by $R^{32}$ may form a single rings or plural aromatic rings or aliphatic rings together with carbon atoms to which they are bonded. In this case, the ring formed by $R^{32}$ has 4 to 20 carbon atoms in total including carbon atoms to which $R^{32}$ is bonded. $R^{32}$ other than the $R^{32}$ that forms an aromatic ring or an aliphatic ring is a hydrogen atom, a halogen atom, an alkyl group having 1 to 10 carbon atoms, or a silicon-containing group. Here, in the group of a single or plural aromatic or aliphatic rings formed by two groups shown by $R^{32}$, an embodiment in which the fluorenyl group has a structure represented by the following structure is included.

[Formula 9]

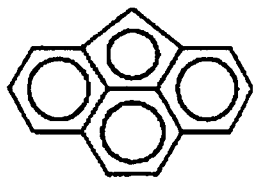

$R^{32}$ is preferably a hydrogen atom or an alkyl group, and in particular a hydrogen atom or a hydrocarbon group having 1 to 3 carbon atoms such as a methyl group, an ethyl group, and a propyl group. As the preferable example of the fluorenyl group having $R^{32}$ as such the substituent, a 2, 7-dialkyl-fluorenyl group may be mentioned. Here, as the alkyl group of the 2,7-dialkyl-fluorenyl group, an alkyl group having 1 to 5 carbon atoms may be mentioned. Further, $R^{31}$ and $R^{32}$ may be the same or different from each other. $R^{33}$ and $R^{34}$ may be the same or different from each other, and

similarly to the above, they are a hydrogen atom, a halogen atom, an alkyl group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorous-containing group. Among them, at least one of $R^{33}$ and $R^{34}$ is preferably an alkyl group having 1 to 3 carbon atoms. $X^1$ and $X^2$ may be the same or different from each other, and represent a hydrogen atom, a halogen atom, a hydrocarbon group having 1 to 20 carbon atoms, a halogenated hydrocarbon group having 1 to 20 carbon atoms, an oxygen-containing group, a sulfur-containing group, a nitrogen-containing group, or a conjugated diene residue formed by $X^1$ and $X^2$. As the conjugated diene residue formed by $X^1$ and $X^2$, the residues of 1,3-butadiene, 2,4-hexadiene, 1-phenyl-1,3-pentanediene, and 1,4-diphenylbutadiene are preferable, and further these diene residues may be substituted with a hydrocarbon group having 1 to 10 carbon atoms. As $X^1$ and $x^2$, a halogen atom, a hydrocarbon group having 1 to 20 carbon atoms, or a sulfur-containing group is preferable. Y represents a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{35}-$, $-P(R^{35})-$, $-P(O)(R^{35})-$, $-BR^{35}-$, or $-AlR^{35}-$ (provided that $R^{35}$ is a hydrogen atom, a halogen atom, a hydrocarbon group having 1 to 20 carbon atoms, and a halogenated hydrocarbon group having 1 to 20 carbon atoms). Among these divalent groups, those wherein the shortest linkage part of -Y-is constituted by one or two atoms are preferable. Further, $R^{35}$ is a halogen atom, a hydrocarbon group having 1 to 20 carbon atoms, and a halogenated hydrocarbon group having 1 to 20 carbon atoms. Y is preferably a divalent hydrocarbon group having 1 to 5 carbon atoms, a divalent silicon-containing group, or a divalent germanium-containing group, and more preferably a divalent silicon-containing group, and especially preferably an alkylsilylene group, an alkylarylsilylene group, or an arylsilylene group.

<Example of metallocene compound -8>

Further, as the metallocene compound, a metallocene compound represented by the following general formula (10) may also be used.

[Formula 10]

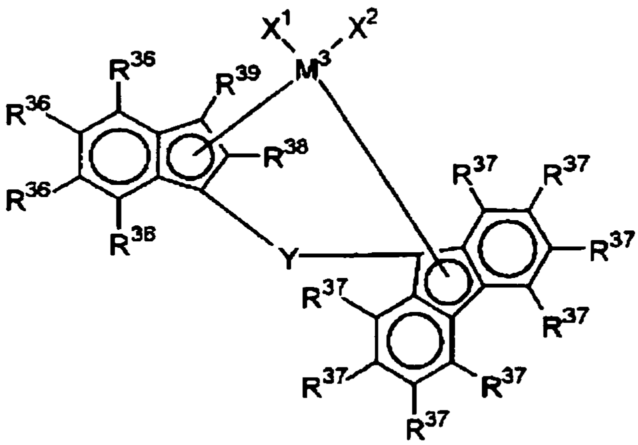

··· (10)

In the formula (10), $M^3$ is a transition metal belonging to Group 4 of the periodic table, specifically titanium, zirconium or hafnium, and preferably zirconium. $R^{36}$ may be the same or different from each other, and is a hydrogen atom, a halogen atom, an alkyl group having 1 to 10 carbon atoms, an aryl group having 6 to 10 carbon atoms, an alkenyl group having 2 to 10 carbon atoms, a silicon-containing group, an oxygen-containing group, a sulfur-containing group, a nitrogen-containing group, or a phosphorous-containing group. Here, the alkyl group and the alkenyl group may be substituted with a halogen atom. Among them, $R^{36}$ is preferably an alkyl group, an aryl group, or a hydrogen atom, and particularly a hydrocarbon group having 1 to 3 carbon atoms such as a methyl group, an ethyl group, a n-propyl group, and an i-propyl group; an aryl group such as a phenyl group, an α-naphthyl group, β-naphthyl group, and the like; or a hydrogen group. $R^{37}$ may be the same or different from each other, and is a hydrogen atom, a halogen atom, an alkyl

group having 1 to 10 carbon atoms, an aryl group having 6 to 20 carbon atoms, an alkenyl group having 2 to 10 carbon atoms, an arylalkyl group having 7 to 40 carbon atoms, an arylalkenyl group having 8 to 40 carbon atoms, an alkylaryl group having 7 to 40 carbon atoms, a silicon-containing group, an oxygen-containing group, a sulfur-containing group, a nitrogen-containing group, or a phosphorous-containing group. Here, the alkyl group, the aryl group, the alkenyl group, the arylalkyl group, the arylalkenyl group, and the alkylaryl group may be substituted with a halogen atom. Among them, $R^{37}$ is preferably a hydrogen atom or an alkyl group, and particularly a hydrogen atom or a hydrocarbon group having 1 to 4 carbon atoms such as a methyl group, an ethyl group, an n-propyl group, an i-propyl group, an n-butyl group, and a tert-butyl group. Further, $R^{36}$ and $R^{37}$ may be the same or different from each other. Either one of $R^{38}$ or $R^{39}$ is an alkyl group having 1 to 5 carbon atoms, and the other is a hydrogen atom, a halogen atom, an alkyl group having 1 to 10 carbon atoms, an alkenyl group having 2 to 10 carbon atoms, a silicon-containing group, an oxygen-containing group, a sulfur-containing group, a nitrogen-containing group, or a phosphorous-containing group. Among them, preferably, one of $R^{38}$ and $R^{39}$ is an alkyl group having 1 to 3 carbon atoms such as a methyl group, an ethyl group, and a propyl group, and the other is a hydrogen atom. $X^1$ and $X^2$ may be the same or different from each other, and are a hydrogen atom, a halogen atom, a hydrocarbon group having 1 to 20 carbon atoms, a halogenated hydrocarbon group having 1 to 20 carbon atoms, an oxygen-containing group, a sulfur-containing group, a nitrogen-containing group, or a conjugated diene residue formed by $X^1$ and $X^2$. Among them, a halogen atom or a hydrocarbon group having 1 to 20 carbon atoms is preferable. Y is a divalent hydrocarbon group having 1 to 20 carbon atoms, a divalent halogenated hydrocarbon group having 1 to 20 carbon atoms, a divalent silicon-containing group, a divalent germanium-containing group, a divalent tin-containing group, -O-, -CO-, -S-, -SO-, $-SO_2-$, $-NR^{40}-$, $-P(R^{40})-$, $-P(O)(R^{40})-$, $-BR^{40}-$, or $-AlR^{40}-$ (provided that $R^{40}$ is a hydrogen atom, a halogen atom, a hydrocarbon group having 1 to 20 carbon atoms, and a halogenated hydrocarbon group having 1 to 20 carbon atoms) . Among them, Y is preferably a divalent hydrocarbon group having 1 to 5 carbon atoms, a divalent silicon-containing group, or a divalent germanium-containing group, and more preferably a divalent silicon-containing group, and especially preferably an alkylsilylene group, an alkylarylsilylene group, or an arylsilylene group.

<Example of metallocene compound -9>

Further, as the metallocene compound, the compound represented by the following general formula (11) may also be used.

[Formula 11]

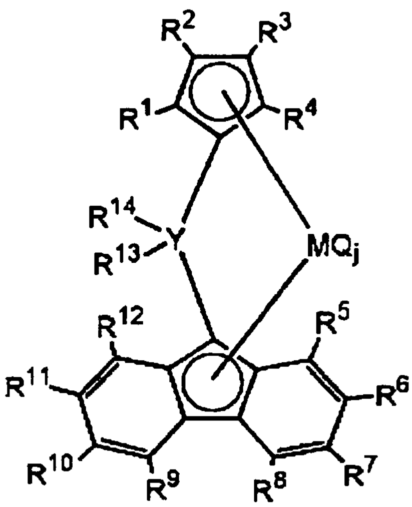

... (1 1)

In the formula (11), Y is selected from a carbon atom, a silicon atom, a germanium atom and a tin atom, and M is Ti, Zr or Hf. $R^1$, $R^2$, $R^3$, $R^4$, $R^5$, $R^6$, $R^7$, $R^8$, $R^9$, $R^{10}$, $R^{11}$ and $R^{12}$ are selected from a hydrogen atom, a hydrocarbon group, and a silicon-containing group, and may be the same or different from one another, and the adjacent groups of $R^5$ to $R^{12}$ may be bonded to one another to form a ring structure. $R^{13}$ and $R^{14}$ are selected from a hydrocarbon group and a silicon-containing group, and may be the same or different from each other, and $R^{13}$ and $R^{14}$ may be bonded to each other to form a ring structure. Q may be selected in the same or different combination from a halogen atom, a

hydrocarbon group, an anionic ligand, or a neutral ligand capable of coordinating with a lone pair of electrons, and j is an integer of 1 to 4.

In the following, the cyclopentadienyl group, the fluorenyl group and the bridged part which are the characteristics in the chemical structure of the bridged metallocene compound relating to the present invention and other characteristics will be explained in this order, and then preferable bridged mettalocene compounds having these characteristics in combination will be explained.

Cyclopentadienyl group

The cyclopentadienyl group may or may not be substituted. The phrase "the cyclopentadienyl group which may or may not be substituted" means a cyclopentadienyl group whose $R^1$, $R^2$, $R^3$ and $R^4$ in the general formula (11) are all hydrogen atoms or any one or more of $R^1$, $R^2$, $R^3$ and $R^4$ is substituted with a hydrocarbon group (f1), preferably a hydrocarbon group having 1 to 20 in total carbon atoms (f1'); or a silicon-containing group (f2), preferably with a silicon-containing group having 1 to 20 in total carbon atoms (f2'). When two or more of $R^1$, $R^2$, $R^3$ and $R^4$ are substituted, those substituents may be the same or different from one another. Further, the term "hydrocarbon group having 1 to 20 in total carbon atoms" means an alkyl group, an alkenyl group, an alkynyl group, and an aryl group, which is composed of only carbon and hydrogen. It includes a group in which both of any adjacent two hydrogen atoms are simultaneously substituted to form an aliphatic ring or an aromatic ring. The hydrocarbon group (f1') having 1 to 20 in total carbon atoms includes, in addition to an alkyl group, an alkenyl group, an alkynyl group, and an aryl group, which are composed of only carbon and hydrogen, a heteroatom-containing hydrocarbon group in which a part of the hydrogen atoms directly bonded to these carbon atoms is substituted with a halogen atom, an oxygen-containing group, a nitrogen-containing group or a silicon atom, and a group in which any adjacent two hydrogen atoms form an alicyclic ring. These groups (f1') include a linear hydrocarbon group such as a methyl group, an ethyl group, an n-propyl group, an allyl group, an n-butyl group, an n-pentyl group, an n-hexyl group, an n-heptyl group, an n-octyl group, an n-nonyl group, an n-decanyl group and the like; a branched hydrocarbon group such as an isopropyl group, a t-butyl group, an amyl group, a 3-methylpentyl group, a 1,1-diethylpropyl group, a 1,1-dimethylbutyl group, a 1-methyl-1-propylbutyl group, a 1,1-propylbutyl group, 1,1-dimethyl-2-methylpropyl group, a 1-methyl-1-isopropyl-2-metylpropyl group and the like; a cyclic saturated hydrocarbon group such as a cyclopentyl group, a cyclohexyl group, a cycloheptyl group, a cyclooctyl group, a norbonyl group, an adamantyl group and the like; a cyclic unsaturated hydrocarbon group and a nuclear alkyl-substituted product thereof such as a phenyl group, a naphthyl group, a biphenyl group, a phenantolyl group, an anthrathenyl group and the like; a saturated hydrocarbon group substituted with an aryl group such as a benzyl group, a cumyl group and the like; and a heteroatom-containing hydrocarbon group such as a methoxy group, an ethoxy group, a phenoxy group, an N-methylamino group, a trifluoromethyl group, a tribromomethyl group, a pentafluoroethyl group, a pentafluorophenyl group and the like.

The silicon-containing group (f2) refers, for instance, to a group in which the ring carbon of the cyclopentadienyl group is directly covalently bonded to a silicon atom, and specifically to an alkylsilyl group and an arylsilyl group. The silicon-containing group (f2') having 1 to 20 in total carbon atoms includes a trimethylsilyl group, a triphenylsilyl group and the like.

Fluorenyl group

The fluorenyl group may or may not be substituted. The phrase "the fluorenyl group which may or may not be substituted" means a fluorenyl group in which $R^5$, $R^6$, $R^7$, $R^8$, $R^9$, $R^{10}$, $R^{11}$ and $R^{12}$ that are contained in the fluorenyl group part in the general formula (11) are all hydrogen atoms or any one or more of $R^5$, $R^6$, $R^7$, $R^8$, $R^9$, $R^{10}$, $R^{11}$ and $R^{12}$ are substituted with the hydrocarbon group (f1), preferably with a hydrocarbon group having 1 to 20 in total carbon atoms (f1'), or the silicon-containing group (f2), preferably with a silicon-containing group having 1 to 20 in total carbon atoms (f2'). When two or more of $R^5$, $R^6$, $R^7$, $R^8$, $R^9$, $R^{10}$, $R^{11}$ and $R^{12}$ are substituted, these substituents may be the same or different from one another. Further, adjacent groups of $R^5$, $R^6$, $R^7$, $R^8$, $R^9$, $R^{10}$, $R^{11}$ and $R^{12}$ may form a ring by bonding to one another. Because of easiness in catalyst preparation, a fluorenyl group in which $R^6$ and $R^{11}$, and $R^7$ and $R^{10}$ are the same each other are preferably used.

A preferable group of the hydrocarbon group (f1) is the above-mentioned hydrocarbon group (f1') having 1 to 20 in total carbon atoms, and a preferable group of the silicon-containing group (f2) is the silicon-containing group (f2') having 1 to 20 in total carbon atoms.

Covalent bond bridging

A main chain of the bond which binds the cyclopentadienyl group with the fluorenyl group is a divalent covalent bond bridging containing a carbon atom, a silicon atom, a germanium atom and a tin atom. An important aspect in a

high temperature solution polymerization of the present invention is that a bridging atom Y of the covalent bond bridging part contains $R^{13}$ and $R^{14}$ which may be the same or different from each other. A preferable example of the hydrocarbon group (f1) is the hydrocarbon group (f1') having 1 to 20 in total carbon atoms described above, and a preferable example of the silicon-containing group (f2) is the silicon-containing group (f2' ) having 1 to 20 in total carbon atoms described above.

Other characteristics of bridged metallocene compound

In the general formula (11), Q is selected in the same or different combination from halogen, a hydrocarbon group having 1 to 10 carbon atoms, or a neutral, a conjugated, or a non-conjugated diene having 10 or less carbon atoms, an anionic ligand, or a neutral ligand capable of coordinating with a lone pair of electrons. The specific example of halogen includes fluorine, chlorine, bromine and iodine and the specific example of the hydrocarbon group includes a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1,1-dimethylbutyl group, a 1,1,3-trimethylbutyl group, a neopentyl group, a cyclohexylmethyl group, a cyclohexyl group, a 1-methyl-1-cyclohexyl group, and the like. The specific example of the neutral, conjugated, or non-conj ugated diene having 10 or less carbon atoms includes s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis(trimethylsilyl)-1,3-butadiene and the like. The specific example of the anionic ligand includes an alkoxy group such as a methoxy group, a tert-buthoxy group, a phenoxy group and the like; a carboxylate group such as an acetate group, a benzoate group and the like; a sulfonate group such as a mesylate group, a tosylate group and the like; and others. The specific example of the neutral ligand capable of coordinating with a lone pair of electrons includes an organic phosphorous compound such as trimethyl phosphine, triethyl phosphine, triphenyl phosphine, diphenyl methyl phophine and the like, or ethers such as tetrahydrofurane, diethyl ether, dioxane, 1,2-dimethoxyethane and the like. j is an integer of 1 to 4, and when j is 2 or more, Q may be the same or different from each other.

<Example of metallocene compound -10>

Further, as the metallocene compound, the compound represented by the following general formula (12) may also be used.

[Formula 12]

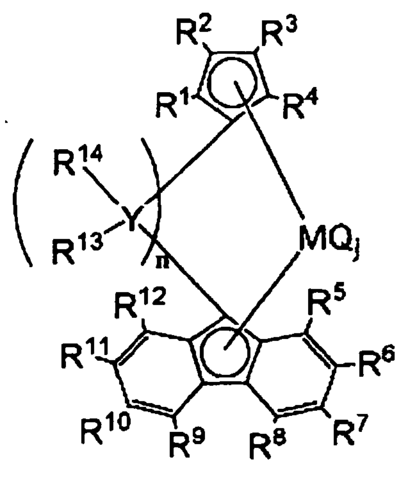

... (1 2)

In the formula, $R^1$, $R^2$, $R^3$, $R^4$, $R^5$, $R^6$, $R^7$, $R^8$, $R^9$, $R^{10}$, $R^{11}$, $R^{12}$, $R^{13}$ and $R^{14}$ are selected from a hydrogen atom, a hydrocarbon group, and a silicon-containing group and may be the same or different from one another. The adjacent substituents of $R^1$ to $R^{14}$ may be bonded to each other to form a ring structure. M is Ti, Zr or Hf, and Y is an atom belonging to Group 14 of the periodic table. Q is selected in the same or different combination from the group

consisting of halogen, a hydrocarbon group, a neutral, a conjugated, or a non-conjugated diene having 10 or less carbon atoms, an anionic ligand, and a neutral ligand capable of coordinating with a lone pair of electrons. n is an integer of 2 to 4, and j is an integer of 1 to 4.

In the general formula (12), the hydrocarbon group is preferably an alkyl group having 1 to 20 carbon atoms, an arylalkyl group having 7 to 20 carbon atoms, an aryl group having 6 to 20 carbon atoms, or an alkylaryl group having 7 to 20 carbon atoms, and may contain one or more ring structures.

The specific example of them includes a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1, 1-dimethylbutyl group, a 1,1,3-trimethylbutyl group, a neopentyl group, a cyclohexylmethyl group, a cyclohexyl group, a 1-methyl-1-cyclohexyl group, a 1-adamantyl group, a 2-adamantyl group, a 2-methyl-2-adamantyl group, a menthyl group, a norbonyl group, a benzyl group, a 2-phenylethyl group, a 1-tetrahydronaththyl group, a 1-methyl-1-tetrahydronaphthyl group, a phenyl group, a naphthyl group, a tolyl group and the like.

In the general formula (12), the silicon-containing hydrocarbon group is preferably an alkyl or an arylsilyl group having 1 to 4 silicon atoms and 3 to 20 carbon atoms, and the specific example of them includes a trimethylsilyl group, a tert-butyldimethylsilyl group, a triphenylsilyl group and the like.

In the present invention, $R^1$ to $R^{14}$ in the general formula (12) are selected from a hydrogen atom, a hydrocarbon group, a silicon-containing hydrocarbon group, and may be the same or different from one another. As the preferable specific example of the hydrocarbon group and the silicon-containing hydrocarbon group, there may be mentioned those mentioned above.

The adjacent substituents of $R^1$ to $R^{14}$ on the cyclopentadienyl ring of the general formula (12) may form a ring by bonding to each other.

M of the general formula (12) is an element belonging to Group 4 of the periodic table, that is, zirconium, titanium or hafnium, and preferably zirconium.

Y is an atom belonging to Group 14 of the periodic table, and preferably a carbon atom or a silicon atom. n is an integer of 2 to 4, preferably 2 or 3, and especially preferably 2.

Q is selected in the same or different combination from the group consisting of a halogen atom, a hydrocarbon group, a neutral, a conjugated, or a non-conjugated diene having 10 or less carbon atoms, an anionic ligand, and a neutral ligand capable of coordinating with a lone pair of electrons. When Q is a hydrocarbon group, a hydrocarbon group having 1 to 10 carbon atoms is more preferable.

The specific example of the halogen atom includes a fluorine atom, a chlorine atom, a bromine atom and an iodine atom, and the specific example of the hydrocarbon group includes a methyl group, an ethyl group, an n-propyl group, an isopropyl group, a 2-methylpropyl group, a 1,1-dimethylpropyl group, a 2,2-dimethylpropyl group, a 1,1-diethylpropyl group, a 1-ethyl-1-methylpropyl group, a 1,1,2,2-tetramethylpropyl group, a sec-butyl group, a tert-butyl group, a 1, 1-dimethylbutyl group, a 1,1,3-trimethylbutyl group, a neopentyl group, a cyclohexylmethyl group, a cyclohexyl group, a 1-methyl-1-cyclohexyl group, and the like. The specific example of the neutral, conjugated, or non-conjugated diene having 10 or less carbon atoms includes s-cis- or s-trans-$\eta^4$-1,3-butadiene, s-cis- or s-trans-$\eta^4$-1,4-diphenyl-1,3-butadiene, s-cis- or s-trans-$\eta^4$-3-methyl-1,3-pentadiene, s-cis- or s-trans-$\eta^4$-1,4-dibenzyl-1,3-butadiene, s-cis- or s-trans-$\eta^4$-2,4-hexadiene, s-cis- or s-trans-$\eta^4$-1,3-pentadiene, s-cis- or s-trans-$\eta^4$-1,4-ditolyl-1,3-butadiene, s-cis- or s-trans-$\eta^4$-1,4-bis(trimethylsilyl)-1,3-butadiene and the like. The specific example of the anionic ligand includes an alkoxy group such as a methoxy group, a tert-buthoxy group, a phenoxy group and the like; a carboxylate group such as an acetate group, a benzoate group and the like; a sulfonate group such as a mesylate group, a tosylate group and the like, and others. Specific example of the neutral ligands capable of coordinating with a lone pair of electrons includes an organic phosphorous compound such as trimethyl phosphine, triethyl phosphine, triphenyl phosphine, diphenyl methyl phophine and the like, or ethers such as tetrahydrofurane, diethyl ether, dioxane, 1,2-dimethoxyethane and the like. When j is an integer of 2 or more, Q may be the same or different from each other.

In the formula (12), there are 2 to 4 plural Y, and they may be the same or different from each other. Plural $R^{13}$ and plural $R^{19}$ bonding to Y may be the same or different from each other. For instance, plural $R^{13}$ bonding to the same Y may be different from each other, or plural $R^{13}$ bonding to different Y may be the same with each other. Further, $R^{13}$ or $R^{14}$ may form a ring by themselves.

Further, as the preferable examples of the transition metal compound belonging to Group 4 of the periodic table as shown by the formula (12), the compounds represented by the following general formula (13) may be mentioned.

[Formula 13]

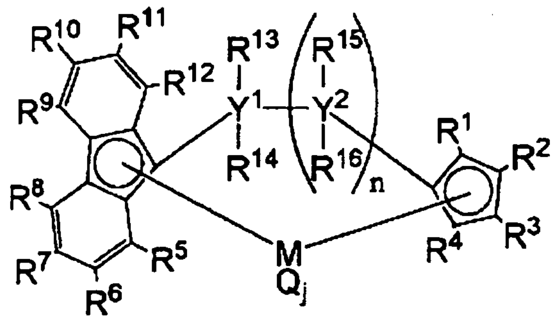

··· (1 3)

In the formula (13), $R^1$, $R^2$, $R^3$, $R^4$, $R^5$, $R^6$, $R^7$, $R^8$, $R^9$, $R^{10}$, $R^{11}$ and $R^{12}$ are selected from a hydrogen atom, a hydrocarbon group, and a silicon-containing group, and they may be the same or different from each other. $R^{13}$, $R^{14}$ , $R^{15}$ and $R^{16}$ are a hydrogen atom or a hydrocarbon group, n is an integer of 1 to 3, and when n = 1, $R^1$ to $R^{16}$ are not a hydrogen atom at the same time and may be the same or different from each other. Adjacent substituents of $R^5$ to $R^{12}$ may be bonded to each other to form a ring, $R^{13}$ and $R^{15}$ may form a ring by bonding to each other, and also $R^{14}$ and $R^{16}$ may form a ring by bonding to each other at the same time when $R^{13}$ and $R^{15}$ form a ring by bonding to each other. $Y^1$ and $Y^2$ are an atom belonging to Group 14 of the periodic table and may be the same or different from each other. M is Ti, Zr or Hf. Q may be selected in the same or different combination from a halogen atom, a hydrocarbon group, an anionic ligand, or a neutral ligand capable of coordinating with a lone pair of electrons, and j is an integer of 1 to 4.
Compounds such as metallocene compounds of the examples-9 and -10 are disclosed in the Japanese Patent Laid-Open Publication No. 2004-175707, WO2001/027124, WO2004/029062, WO2004/083265, and the like.
The metallocene compounds explained above are used alone or in a combination of two or more kinds. Further, the metallocene compounds may be used after diluted with hydrocarbon, halogenated hydrocarbon or the like.
A catalyst component is composed of a bridged metallocene compound represented by the above (A), and at least one compound (B) selected from an organoaluminum oxy-compound (b-1), a compound (b-2) forming an ion pair by reacting with the bridged metallocene compound (A), and an organoaluminum compound (b-3).
In the following, the component (B) will be specifically explained.

<Organoaluminum oxy-compound (b-1)>

As the organoaluminum oxy-compound (b-1) used in the present invention, a conventionally well-known aluminoxane may be used as it is. The specific example of them may be represented by the following general formula (14)
[Formula 14]

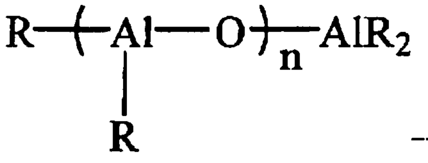

———————— (1 4)

and/or the general formula (15),
**[0176]**

[Formula 15]

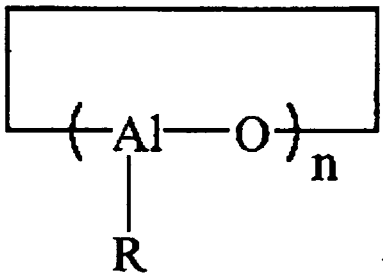

(15)

(wherein R represents a hydrocarbon group having 1 to 10 carbon atoms, and n represents an integer of 2 or more), and especially a methyl aluminoxane in which R is a methyl group and n is 3 or more, preferably 10 or more, is used. These aluminoxanes may do well even though they may be contaminated with a small quantity of an organoaluminum compound. The high-temperature solution polymerization of the present invention is characterized in that the benzene-insoluble organoaluminum oxy-compound disclosed in the Japanese Patent Laid-Open Publication No. H02-78687 may also be applied. Further, an organoaluminum oxy-compound disclosed in the Japanese Patent Laid-Open Publication No. H02-167305, an aluminoxane and the like having 2 or more kinds of alkyl groups disclosed in Japanese Patent Laid-Open Publication No. H02-24701 and Japanese Patent Laid-Open Publication No. H03-103407 may also be suitably applied. Here, the "benzene-insoluble" organoaluminum oxy-compound used in the high-temperature solution polymerization of the present invention means that the Al component dissolved in benzene at 60°C in terms of an Al atom is usually 10% or less, preferably 5% or less, and especially preferably 2% or less, and that the compound is insoluble or poorly soluble in benzene.

Further, as the organoaluminum oxy-compound used in the present invention, a modified methyl aluminoxane represented by the following formula (16), and the like may also be mentioned.

[Formula 16]

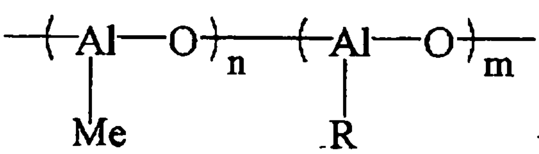

(16)

(wherein R represents a hydrocarbon group having 1 to 10 carbon atoms, and m and n represent each an integer of 2 or more). This modified methyl aluminoxane is prepared by using trimethyl aluminum and an alkyl aluminum other than trimethyl aluminum. Such compound [V] is generally referred to as NMAO. Such NMAO may be prepared by the methods disclosed in the US4960878 and US5041584. Further, the modified methyl aluminoxane, in which R is an isobutyl group prepared using trimethyl aluminum and triisobutyl aluminum, is commercially produced under the trade name of MMAO or TMAO by Tosoh Finechem Corporation and the like. Such MMAO is aluminoxane whose solubility in various solvents and storage stability are improved, and specifically, it is soluble in an aliphatic hydrocarbon or an alicyclic hydrocarbon, contrary to the aluminoxane represented by formulae (14) or (15) which is insoluble or poorly soluble in benzene.

Further, as the organoaluminum oxy-compound used in the present invention, a boron-containing organoaluminum oxy-compound shown by the following general formula (17) may also be mentioned.

[Formula 17]

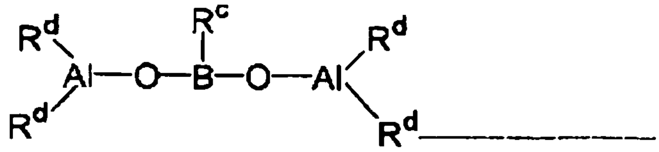

(17)

(In the formula, $R^c$ represents a hydrocarbon group having 1 to 10 carbon atoms. $R^d$ may be the same or different from each other and represents a hydrogen atom, a halogen atom, or a hydrocarbon group having 1 to 10 carbon atoms.)

<Compound (b-2) forming an ion pair by reacting with a bridged metallocene compound (A)>

As the compound (b-2) forming an ion pair by reacting with a bridged metallocene compound (A) (hereinafter may be abbreviated as an "ionic compound"), there may be mentioned a Lewis acid, an ionic compound, a borane compound, a carborane compound, and the like, which are disclosed in Japanese Patent Laid-Open Publication No. H01-501950, Japanese Patent Laid-Open Publication No. H01-502036, Japanese Patent Laid-Open Publication No. H03-179005, Japanese Patent Laid-Open Publication No. H03-179006, Japanese Patent Laid-Open Publication No. H03-207703 and Japanese Patent Laid-Open Publication No. H03-207704, and US 5321106, and the like. In addition, a heteropoly compound and an isopoly compound may also be mentioned.

The ionic compound preferably used in the present invention is a compound represented by the following general formula (18).

[Formula 18]

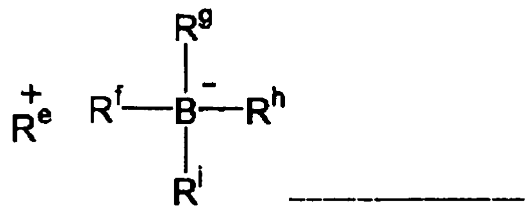

(18)

In the formula, as the $R^{e+}$, there may be mentioned $H^+$, a carbenium cation, an oxonium cation, an ammonium cation, a phosphonium cation, a cycloheptyl trienyl cation, a ferrocerium cation having a transition metal, and the like. $R^f$ to $R^i$ may be the same or different from one another, and are an organic group, and preferably an aryl group.

The specific example of the carbenium cation includes a tri-substituted carbenium cation, such as a triphenyl carbenium cation, a tris(methylphenyl) carbenium cation, a tris (dimethylphenyl) carbenium cation, and the like, and others.

The specific example of the ammonium cation includes a trialkyl ammonium cation such as a trimethyl ammonium cation, a triethyl ammonium cation, a tri(n-propyl) ammonium cation, a triisopropyl ammonium cation, a tri (n-butyl) ammonium cation, a trisiobutyl ammonium cation, and the like; an N,N-dialkyl anilinium cation such as an N,N-dimethyl anilinium cation, an N, N-diethyl anilinium cation, an N,N-2,4,6-pentamethyl anilinium cation and the like; and a dialkyl ammonium cation such as a diisopropyl ammonium cation, a dicyclohexyl ammonium cation and the like; and others.

The specific Example of the phosphonium cation includes a triaryl phosphonium cation such as a triphenyl phosphonium cation, a tris (methylphenyl) phosphonium cation, a tris (dimethylphenyl) phosphonium cation and the like.

Among them, as $R^{e+}$, a carbenium cation, an ammonium cation, and the like are preferable, and a triphenyl carbenium cation, an N,N-diemthyl anilinium cation, and an N,N-diethyl anilinium cation are particularly preferable.

The specific example of the carbenium salt includes triphenylcarbenium tetraphenylborate, triphenylcarbenium tetrakis(pentafluorophenyl)borate, triphenylcarbenium tetrakis(3,5-ditrifluoromethylphenyl)borate, tris(4-methylphenyl) carbenium tetrakis(pentafluorophenyl)borate, tris(3,5-dimethylphenyl)carbenium tetrakis(pentafluorophenyl)borate, and the like.

As the ammonium salt, there may be mentioned a trialkyl-substituted ammonium salt, an N,N-dialkyl anilinium salt, a dialkyl ammonium salt, an the like.

The specific example of the trialkyl-substituted ammonium salt includes triethylammonium tetraphenylborate, tripropylammonium tetraphenylborate, tri(n-butyl) ammonium tetraphenylborate, trimethylammonium tetrakis(p-tolyl)borate, trimethylammonium tetrakis(o-tolyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis(4-trifluoromethylphenyl)borate, tri(n-butyl)ammonium tetrakis(3,5-ditrifluoromethylphenyl)borate, tri(n-butyl)ammonium tetrakis(o-tolyl)borate, dioctadecylmethylammonium tetraphenylborate, dioctadecylmethylammonium tetrakis (p-tolyl)borate, dioctadecylmethylammonium tetrakis(o-tolyl)borate, dioctadecylmethylammonium tetrakis(pentafluorophenyl)borate, dioctadecylmethylammonium tetrakis(2,4-dimethylphenyl)borate, dioctadecylmethylammonium tetrakis (3,5-dimethylphenyl)borate, dioctadecylmethylammonium tetrakis(4-trifluorometylphenyl)borate, dioctadecylmethylammonium tetrakis(3,5-ditrifluoromethylphenyl)borate, dioctadecylmethyl ammonium, and the like.

The specific example of the N,N-dialkyl anilinium salt includes N,N-dimethylanilinium tetraphenylborate, N,N-dimethylanilinium tetrakis(pentafluorophenyl)borate, N,N-dimethylanilinium tetrakis(3,5-ditrifluoromethylphenyl)borate, N,N-diethylanilinium tetraphenylborate, N,N-diethylanilinium tetrakis(pentafluorophenyl)borate, N,N-diethylanilinium tetrakis(3,5-ditrifluoromethylphenyl)borate, N,N-2,4,6-pentamethylanilinium tetraphenylborate, N,N-2,4,6-pentamethylanilinium tetrakis(pentafluorophenyl)borate, and the like.

The specific example of the dialkylammonium salt includes di(1-propyl)ammonium tetrakis(pentafluorophenyl) borate, dicyclohexylammonium tetraphenylborate, and the like.

In addition to these compounds, the ionic compounds disclosed by the present inventors (Japanese Patent Laid-Open Publication No. 2004-51676) may also be used without any restrictions.

Here, the ionic compounds (b-2) as mentioned above may be used in combination of two or more kinds.

<Organoaluminum compound (b-3)>

As the organoaluminum compound (b-3) forming an olefin polymerization catalyst, there may be mentioned, for example, an organoaluminum compound represented by the following general formula [X], a complex alkyl compound between a metal belonging to Group 1 of the periodic table and aluminum represented by the following general formula (19), and the like.

$$R^a_mAl(OR^b)_nH_pX_q \qquad (19)$$

(In the formula, $R^a$ and $R^b$ may be the same or different from each other and represent a hydrocarbon group having 1 to 15 carbon atoms, preferably 1 to 4 carbon atoms; X represents a halogen atom; m is $0 < m \leq 3$, n is $0 \leq n < 3$, p is $0 \leq p < 3$, q is $0 \leq q < 3$, and $m + n + p + q = 3$.) The specific examples of such organoaluminum compounds include a tri-n-alkylaluminum such as trimethylaluminum, triethylaluminum, tri-n-butylaluminum, trihexylaluminum, trioctylaluminum and the like; a tri-branched alkylaluminum such as tri-isopropylaluminum, tri-isobutylaluminum, tri-sec-butylaluminum, tri-tert-butylaluminum, tri-2-methylbutylaluminum, tri-3-methylhexylaluminum, tri-2-ethylhexylaluminum and the like; a tri-cycloalkylaluminum such as tri-cyclohexylaluminum, tri-cyclooctylaluminum, and the like; a triarylaluminum such as triphenylaluminum, tritolylaluminum and the like; a dialkylaluminum hydride such as diisopropylaluminum hydride, diisobutylaluminum hydride and the like; an alkenylaluminum such as isoprenyl aluminum which is represented by the general formula $(i\text{-}C_4H_9)_xAl_y(C_5H_{10})_z$ (in the formula, x, y and z represent a positive integer, and z is $z \leq 2x$) and the like; an alkylaluminum alkoxide such as isobutylaluminum methoxide, isobutyl aluminum ethoxide and the like; a dialkylaluminum alkoxide such as dimethylaluminum methoxide, diethylaluminum ethoxide, dibutylaluminum buthoxide and the like; an alkylaluminum sesquialkoxide such as ethylaluminum sesquiethoxide, butylaluminum sesquibuthoxide and the like; a partially alkoxylated alkyl aluminum having an average composition shown by the general formula $R^a_{2.5}Al(OR^b)_{0.5}$ and the like; an alkylaluminum aryloxide such as diethylaluminum phenoxide, diethylaluminum (2,6-di-t-butyl-4-methylphenoxide) and the like; a dialkylaluminum halide such as dimethylaluminum chloride, diethylaluminum chloride, dibutylaluminum chloride, diethylaluminum bromide, diisobutylaluminum chloride and the like; an alkylaluminum sesquihalide such as ethylaluminum sesquichloride, butylaluminum sesquichloride, ethylaluminum sesquibromide and the like; a partially halogenated alkylaluminum such as an alkylaluminum dihalide, namely, ethylaluminum dichloride and the like; a dialkylaluminum hydride such as diethylaluminum hydride, dibutylaluminum hydride and the like; other partially hydrogenated alkylaluminum such as an alkylaluminum dihydride, namely, ethylaluminum dihydride, propylaluminum dihydride

and the like; a partially alkoxylated and halogenated alkylaluminum such as ethylaluminum ethoxychloride, butylaluminum bothoxychloride, ethylaluminum ethoxybromide and the like, and others.

A complex alkyl compound between a metal belonging to Group 1 of the periodic table and aluminum represented by the general formula (20)

$$M^2AlR^a_4 \qquad (20)$$

(in the formula, $M^2$ represents Li, Na or K, and $R^a$ represents a hydrocarbon group having 1 to 15 carbon atoms, preferably 1 to 4 carbon atoms). There may be mentioned $LiAl(C_2H_5)_4$, $LiAl(C_7H_{15})_4$ and the like as the example of such compounds.

Further, a compound similar to the compound represented by the general formula (20) may also be used. For example, an organoaluminum compound in which two or more aluminum compounds are bonded via a nitrogen atom may be mentioned. The specific example of such compound includes $(C_2H_5)_2AlN(C_2H_5)Al(C_2H_5)_2$ and the like.

In view of easy availability, trimethyl aluminum and triisobutyl aluminum are preferably used as an organoaluminum compound (b-3).

<Polymerization>

Usually, the polyethylene wax used in the present invention may be obtained by homopolymerizing ethylene or copolymerizing ethylene and an $\alpha$-olefin in the presence of the metallocene catalyst in a liquid phase. In the polymerization, the process for using each components and the order of addition may be arbitrarily selected, and the following methods may be exemplified.

[q1]: A method for adding a component (A) alone to a polymerization reactor.

[q2]: A method for adding a component (A) and a component (B) to a polymerization reactor in an arbitrary order.

In the method [q2], at least two or more of each of the catalyst components may be brought into contact with each other in advance. At this time, a hydrocarbon solvent is generally used, but an $\alpha$-olefin may be used as a solvent. In addition, each monomer to be used here is the ones mentioned above.

The available polymerization method includes suspension polymerization in which polymerization is carried out in a state where a polyethylene wax is suspended in the form of particles in a solvent such as hexane and the like, gas-phase polymerization in which a solvent is not used, and solution polymerization in which polymerization is carried out in a state where the polyethylene wax is melted alone or together with a solvent at a polymerization temperature of 140°C or more. Among these methods, the solution polymerization is preferable from the viewpoints of economic efficiency and product quality.

The polymerization reaction may be carried out by either a batch process or a continuous process. When the polymerization is carried out by a batch process, the catalyst components are used in the concentrations explained in the following.

When the olefin-polymerization is carried out by using the olefin polymerization catalyst as mentioned above, the component (A) is used usually in the amount of $10^{-9}$ to $10^{-1}$ mol, and preferably $10^{-8}$ to $10^{-2}$ mol relative to 1 liter of the reaction volume.

The component (b-1) is used in an amount such that the mol ratio [(b-1)/M] of the component (b-1) to the total transition metal atoms (M) in the component (A) is usually 0.01 to 5,000, and preferably 0.05 to 2,000. The component (b-2) is used in an amount such that the mol ratio [(b-2)/M] of the ionic compounds in the components (b-2) to total transition metals (M) in the component of (A) is usually 0.01 to 5,000, and preferably 1 to 2,000. The component (b-3) is used in an amount such that the mol ratio [(b-3)/M] of the component (b-3) to the transition metal atoms (M) in the component (A) is usually 1 to 10,000, and preferably 1 to 5,000.

The polymerization reaction is carried out using 10 g of the wax set on a filter under the conditions of a temperature of usually -20 to +200°C, preferably 50 to 180°C, and more preferably 70 to 180°C; and a pressure of usually more than 0 to 7.8 MPa (80 kgf/$cm^2$, gauge pressure) or less, and preferably more than 0 to 4.9 MPa (50 kgf/$cm^2$, gauge pressure) or less.

In the polymerization, ethylene and an optional $\alpha$-olefin used as needed are fed into the polymerization system in an amount ratio such that a polyethylene wax having the specific composition is obtained. In addition, in the polymerization, a molecular weight modifier such as hydrogen and the like may also be added.

When the polymerization is carried out in this manner as mentioned above, since the resulting polymer is usually obtained as a polymerization solution containing this polymer, a polyethylene wax may be obtained by treating the solution by a conventional method.

In the present invention, a catalyst containing the metallocene compound as shown in <Example of metallocene compound -1> is particularly preferable used.

When these catalysts are used, a polyethylene wax having the characteristics as mentioned above may be easily obtained.

The form of the polyethylene wax of the present invention is not particularly restricted, but usually a particle in the form of powders, pellets, or tablet.

[Other components]

In the present invention, in addition to the polyethylene and the polyethylene wax as mentioned above, a stabilizer such as an antioxidant, a UV absorber, a light stabilizer and the like, and an additive such as a metal soap, a filler, a flame retardant and the like, may be used as necessary after adding to a raw material. In addition, a expansion molding may be carried out by adding a expanding agent, and in particular, a low-temperature expansion molding may be carried out by adding a low-temperature expanding agent.
As the stabilizer, there may be mentioned an antioxidant such as a hindered phenol compound, a phosphite compound, a thioether compound and the like; an ultraviolet absorber such as a benzotriazole compound, a benzophenone compound and the like; and a light stabilizer such as a hindered amine compound and the like.
As the metal soap, there may be mentioned a stearate such as magnesium stearate, calcium stearate, barium stearate, zinc stearate and the like, and others.
As the filler, there may be mentioned calcium carbonate, titanium oxide, barium sulfate, talc, clay, carbon black and the like.
As the flame retardant, there may be mentioned a halogenated diphenyl ether such as a decabromodiphenyl ether, an octabromodiphenyl ether and the like; a halogenated compound such as a halogenated polycarbonate and the like; an inorganic compound such as antimony trioxide, antimony tetraoxide, antimony pentaoxide, sodium pyroantimonate, aluminum hydroxide and the like; and a phosphorous compound; and others.
As the flame retarding aid for drip prevention, a compound such as tetrafluoroethylene and the like may be added.
As the antibacterial agent or the fungicide, there may be mentioned an organic compound such as an imidazole compound, a thiazole compound, a nitrile compound, a haloalkyl compound, a pyridine compound and the like; an inorganic substance and an inorganic compound such as silver, a silver based compound, a zinc based compound, a cupper based compound, a titanium based compound, and the like; and others.
Among these compounds, silver and a silver based compound are preferable since they are thermally stable and exhibit high performance.
As the silver based compound, there may be mentioned a silver complex and a silver salt of an aliphatic acid, phosphoric acid and the like. When silver and a silver based compound are used as the antibacterial agent or a fungicide, these substances may also be used after being supported on a porous structure such as zeolite, silica gel, zirconium phosphate, calcium phosphate, hydrotalcite, hydroxyapatite, calcium silicate and the like.
The other additives include a coloring agent, a pigment, a plasticizer, an anti-aging agent, an oil and the like.

[composition ratio of the raw materials]

The composition ratio of a polyolefin resin (A) to a polyethylene wax (B) used as raw materials in the present invention is not particularly restricted as long as the properties of the molded article to be obtained are not impaired.
When the polyethylene (1) is used as the polyolefin resin (A), it is usually used in the amount of 0.01 to 10 parts by weight, preferably 0.1 to 5 parts by weight, and more preferably 0.5 to 3 parts by weight, relative to 100 parts by weight of the polyethylene (1).
When the polyethylene (1) and the polyethylene wax are used in the composition ratio of the above range, the effect of improving the flowability is large as compared with the case where the polyethylene wax is not added, and even if the injection molding is performed at a lower molding temperature, an injection-molded article having the same degree of mechanical properties may be obtained, and the deterioration of mechanical properties caused by addition of the wax may be suppressed. Further, when the injection molding is performed at lower molding temperature, the cooling time is shortened, and the molding cycle is improved. Furthermore, by lowering the molding temperature, not only the thermal deterioration of the resin and the reduction of the resin strength are suppressed but also the resin scorch and the black spots formation may be suppressed.
When the polyethylene (2) is used as the polyolefin resin (A), it is used usually in the amount of 0.01 to 10 parts by weight, preferably 0.1 to 5 parts by weight, and more preferably 0.5 to 3 parts by weight, relative to 100 parts by weight of the polyethylene (2).
When the polyethylene (2) and the polyethylene wax are used in the composition ratio of the above range, the effect of improving the flowability is large as compared with the case where the polyethylene wax is not added, and even if the injection molding is performed at a lower molding temperature, an injection-molded article having the same degree of mechanical properties may be obtained, and the deterioration of mechanical properties caused by addition of the wax may be suppressed. Further, when the injection molding is performed at lower molding temperature, the cooling time is shortened, and the molding cycle is improved. Furthermore, by lowering the molding temperature, not only the thermal

deterioration of the resin and the reduction of the resin strength are suppressed but also the resin scorch and the black spots formation may be suppressed.

When polypropylene is used as the polyolefin resin (A), it is usually used in the amount of 0.01 to 10 parts by weight, preferably 0.1 to 7 parts by weight, and more preferably 0.5 to 5 parts by weight, relative to 100 parts by weight of the polypropylene.

When polypropylene and the polyethylene wax are used in the composition ratio of the above range, the effect of improving the flowability is large as compared with the case where the polyethylene wax is not added, and even if the injection molding is performed at a lower molding temperature, an injection-molded article having the same degree of mechanical properties may be obtained, and the deterioration of mechanical properties caused by addition of the wax may be suppressed. Further, when the injection molding is performed at lower molding temperature, the cooling time is shortened, and the molding cycle is improved. Furthermore, by lowering the molding temperature, not only the thermal deterioration of the resin and the reduction of the resin strength are suppressed but also the resin scorch and the black spots formation may be suppressed.

When the polypropylene resin mixture (1) is used as the polyolefin resin (A), it is usually used in the amount of 0.01 to 10 parts by weight, and preferably 1 to 5 parts by weight, relative to 100 parts by weight of the polypropylene resin mixture (1).

When the polyethylene wax is used in the composition ratio of the above range to the polypropylene resin mixture (1), the effect of improving the flowability is large at the time of injection molding and the moldabilty is excellent, in addition, there is a tendency that the molding rate is further increased and the productivity is improved. Further there are fewer tendencies that mechanical characteristics inherent in the polypropylene resin mixture (1) formed from the polypropylene and the olefinic elastomer is not impaired. Further, as compared with the injection molding without adding the polyethylene wax, the molding may be performed at lower molding temperature and the cooling time may be shortened. Furthermore, by lowering the molding temperature, there may be the cases where not only the thermal deterioration of the resin and the reduction of the resin strength are suppressed but also the resin scorch and the black spots formation may be suppressed.

[Injection molding]

In the method for producing a molded article of the present invention, the raw materials are injection molded.

There is no particular restriction in the injection molding, and a conventionally known method may be applicable. Usually, raw materials of polyolefin resin (A), polyethylene wax (B) and the like which are added from a hopper are melt kneaded in a heated cylinder, and the melt kneaded product is charged into a mold by an injection machine, the resin composition is cooled/solidified in the mold, and then the molded article is released from the mold.

The polyolefin resin (A) and the polyethylene wax (B) may be mixed in advance (pre-mixing) before charging into the injection molding machine, or mixed by providing the polyethylene wax to the resin which has been charged in the injection molding machine (for instance by a side-feed). In any case of the above, a mixture of the polyolefin resin (A) and the polyethylene wax (B) is formed at the time of injection. The pre-mixing method is not particularly restricted, and it may be a melt mixing and a dry blending. As the equipment for the dry blending, there may be mentioned a high-speed mixer such as Henshel mixer and the like, a tumbler, and others. As the equipment for the melt kneading, there may be mentioned a plastomill, a kneader, a roll mixer, a Bunbury mixer, a Blabender, a monoaxial extruder, a biaxial extruder, and the like.

When the polyethylene wax is not added, for example, the temperature of the injection molding of the polyethylene (1) is 140 to 300°C, the temperature of the injection molding of the polyethylene (2) is 150 to 300°C, and the temperature of the injection molding of polypropylene is 180 to 300°C.

According to the present invention, the temperature of the injection molding (the resin temperature) may be set lower by 5°C or more, preferably 10°C or more, and more preferably 15°C or more as compared with the injection molding temperature without adding the polyethylene wax. Here, the phrase "the injection molding temperature without containing the polyethylene wax" means the optimum injection molding temperature appropriately determined by the polyolefin resin (A) to be used in consideration of the molding speed and physical properties of the obtained molded article. For instance, in the case of crystalline polyethylene and crystalline polypropylene, the optimum injection molding temperature $Tpc_0$ may be determined from the crystal melting temperature Tm by the following expression.

$$Tpc_0 = 3/4 \times Tm + 100$$

On the other hand, the phrase "the injection molding temperature with containing the polyethylene wax" means the

injection molding temperature at which the screw torque reaches the same that of the extruder at the injection molding temperature without containing the polyethylene wax. Here "the same" includes the margin of about 5%.

As explained above, if the molding temperature is lowered, the resin scorch at the time of the injection molding may be prevented. Further, the decrease of physical properties is not observed in the molded article obtained by injection molding even if the polyethylene wax is added. Furthermore, since the molding temperature is capable of being decreased, the cooling time of the mold may be shortened, as a result, the molding cycle may be increased, and thus the productivity may be improved with the existing equipment. Further, since the injection molding is performed at a low temperature, a low temperature expanding may also be performed.

When the polypropylene resin mixture (1) is used as the polyolefin resin (A), the injection molding temperature is usually at 180 to 300°C and preferably at 180 to 250°C.

Here, as the conditions of the injection molding other than the injection molding temperature, publicly known conditions may be applied.

Specifically, when polyethylene (1) is used as the polyolefin resin (A), the injection pressure is usually 30 to 100 MPa and preferably 30 to 50 MPa, and the mold temperature is usually 20 to 40°C and preferably 25 to 35°C.

When polyethylene (2) is used as the polyolefin resin (A), the injection pressure is usually 30 to 150 MPa and preferably 30 to 100 MPa, and the mold temperature is usually 20 to 40°C and preferably 25 to 35°C.

When polypropylene is used as the polyolefin resin (A), the injection pressure is usually 40 to 150 MPa and preferably 50 to 80 MPa, and the mold temperature is usually 20 to 80°C and preferably 50 to 60°C.

When a polypropylene resin mixture (1) is used as the polyolefin resin (A), the injection pressure is usually 40 to 150 MPa and preferably 50 to 80 MPa, and the mold temperature is usually 20 to 80°C and preferably 30 to 60°C.

As explained above, a molded article usable for construction materials, automobile parts, industrial machinery parts, electric/electronic parts and the like may be obtained.

[Examples]

In the following, the present invention will be more specifically explained based on Examples, but the present invention is not restricted to these Examples.

In the following Examples, physical properties of the polyethylene and a polyethylene wax were measured as follows.

(Number average molecular weight (Mn))

The number average molecular weight (Mn) was obtained by the GPC measurement under the following conditions. Further, the number average molecular weight (Mn) was determined based on the following conversion method by preparing a calibration curve with the use of a commercially available monodisperse polystyrene standard.
Apparatus: Gel Permeation Chromatograph Alliance GPC2000 System (manufactured by Waters Corporation)
Solvent: o-dichlorobenzene
Column: TSK gel column (manufactured by Tosoh Corporation) × 4
Flow rate: 1.0 mL/min
Sample: 0.15 mg/mL o-dichlorobenzene solution
Temperature: 140°C
Molecular weight conversion: In terms of PE/ universal calibration method
In addition, for the calculation of the universal calibration, the following coefficients of the Mark-Houwink viscosity equations were used.
The coefficient of polystyrene (PS): KPS = $1.38 \times 10^{-4}$, aPS = 0.70
The coefficient of polyethylene (PE) : KPE = $5.06 \times 10^{-4}$, aPE = 0.70

(A value and B value)

From the result of the GPC measurement, the ratio of the component having the molecular weight of 1,000 or less was determined in terms of % by weight, which was used as the A value. Also, from the result of the GPC measurement, the ratio of the component having the molecular weight of 20,000 or more was determined in terms of % by weight, which was used as the B value.

(Melt viscosity)

The melt viscosity was measured at 140°C by using a Brookfield viscometer.

(Density)

The density was measured by the density gradient tube method in accordance with JIS K7112.

(Melting point)

The melting point was measured by differential scanning calorimeter (DSC) [DSC-20, manufactured by Seiko Instruments & Electronics Ltd.]. Firstly, a sample material was heated to 200°C once and kept at this temperature for 5 minutes, and then immediately cooled to room temperature. About 10 mg of this sample was subjected to DSC measurement under a condition of the temperature range from -20 to 200°C at the temperature increase rate of 10°C/min. The value of endothermic peak of the curve obtained from the measurement result was used as a melting point.

(Crystal melting temperature)

The crystal melting temperature (Tm, °C) was measured under a condition of the temperature decreaserate of 2°C/min in accordance with ASTM D 3417 75.

(MI)

In the case of polyethylene (1) and polyethylene (2):

The MI was measured at 190°C under the test load of 21.18 N in accordance with JIS K7210.

In the case of polypropylene:

The MI was measured at 230°C under the test load of 21.18 N in accordance with JIS K7210.

In the case of an ethylene-α-olefin random copolymer:

The MI was measured at 190°C under the test load of 21.18 N in accordance with JIS K7210.

In the case of a propylene-α-olefin random copolymer:

The MI was measured at 230°C under the test load of 21.18 N in accordance with JIS K7210.

(Synthesis of polyethylene wax (1))

By using a metallocene catalyst, the polyethylene wax (1) was synthesized in the following manner.

Into a fully nitrogen-displaced stainless steel autoclave having an inner volume of 2 liters and kept at 25°C were charged with 770 mL of hexane and 115 g of propylene. After the temperature of the system was raised to 150°C, 0. 3 mmol of triisobutylaluminum, 0.04 mmol of dimethylanilinium tetrakis(pentafluorophenyl)borate, and 0.0005 mmol of bis(cyclopentadienyl)zirconium dichloride were added by pressurization with ethylene to initiate the polymerization. Then, the polymerization was carried out for 30 minutes at 155°C by continuously charging only ethylene while keeping the total pressure at 3.0 MPa (gauge pressure).

The polymerization was terminated by adding a small amount of ethanol into the system, and then unreacted ethylene was purged out. The obtained polymer solution was dried under reduced pressure at 100°C overnight to obtain 46 g of polyethylene wax (1). The obtained polyethylene wax (1) had a number average molecular weight (Mn) of 800, a weight-average molecular weight (Mw) of 1, 500, a melt viscosity of 40 mPa·s, a density of 897 ($kg/m^3$), and a melting point of 78.8°C. Also, A value was 31.7% by weight and B value was 0.01% by weight. The results are shown in Table 1.

(Synthesis of polyethylene wax (2))

By using a metallocene catalyst, the polyethylene wax (2) was synthesized in the following manner.

Into a fully nitrogen-displaced stainless steel autoclave having an inner volume of 2 liters and kept at 25°C were charged with 700 mL of hexane and 150 g of propylene. After the temperature of the system was raised to 140°C, 0. 3 mmol of triisobutylaluminum, 0.04 mmol of dimethylanilinium tetrakis(pentafluorophenyl)borate, and 0.0002 mmol of bis(cyclopentadienyl)zirconium dichloride were added by pressurization with ethylene to initiate the polymerization. Then, the polymerization was carried out for 30 minutes at 140°C by continuously charging only ethylene while keeping

the total pressure at 3.0 MPa (gauge pressure).

The polymerization was terminated by adding a small amount of ethanol into the system, and then unreacted ethylene was purged out. The obtained polymer solution was dried under reduced pressure at 100°C overnight to obtain 40 g of polyethylene wax (2). The obtained polyethylene wax (2) had a number average molecular weight (Mn) of 2, 500, a weight-average molecular weight (Mw) of 7,000, a melt viscosity of 600 mPa·s, a density of 880 (kg/$m^3$), and a melting point of 68.2°C. Also, A value was 7.0% by weight and B value was 4.1% by weight. The results are shown in Table 1.

(Synthesis of polyethylene wax (3))

By using a metallocene catalyst, the polyethylene wax (2) was synthesized in the following manner.

Into a fully nitrogen-displaced stainless steel autoclave having an inner volume of 2 liters and kept at 25°C were charged with 920 mL of hexane and 50 g of propylene. After the temperature of the system was raised to 150°C, 0. 3 mmol of triisobutylaluminum, 0.04 mmol of dimethylanilinium tetrakis(pentafluorophenyl)borate, and 0.0002 mmol of bis(cyclopentadienyl)zirconium dichloride were added by pressurization with ethylene to initiate the polymerization. Then, the polymerization was carried out for 30 minutes at 150°C by continuously charging only ethylene while keeping the total pressure at 3.0 MPa (gauge pressure).

The polymerization was terminated by adding a small amount of ethanol into the system, and then unreacted ethylene was purged out. The obtained polymer solution was dried under reduced pressure at 100°C overnight to obtain 40 g of polyethylene wax (2). The obtained polyethylene wax (3) had a number average molecular weight (Mn) of 3, 000, a weight-average molecular weight (Mw) of 8,200, a melt viscosity of 1,000 mPa·s, a density of 932 (kg/$m^3$), and a melting point of 105.0°C. Also, A value was 4.6% by weight and B value was 6.7% by weight. The results are shown in Table 1.

The physical properties of the polyethylene waxes used in the present invention are summarized in Table 1.

[Table 1]

Table 1

| | Mn | Mw | Density (kg/m$^3$) | Melt viscosity (mPa·s) | B-value (%) | A-value (%) | 0.0075×K | 230×K$^{-0.537}$ | DSC melting point (°C) | DSC crystallization temperature (°C) | Value at the left side of the expression (III) |
|---|---|---|---|---|---|---|---|---|---|---|---|
| 30200BT | 2000 | 5000 | 913 | 300 | 2.2 | 9.3 | 2.3 | 10.8 | 98.2 | 86.6 | 91.41 |
| 48070T | 3400 | 9000 | 902 | 1350 | 8.7 | 4.7 | 10.1 | 4.8 | 89.5 | 83.8 | 85.90 |
| 40800T | 2400 | 7000 | 980 | 600 | 4.2 | 7.3 | 4.5 | 7.4 | 127.7 | 116.2 | 124.98 |
| Polyethylene wax (1) | 800 | 1500 | 897 | 40 | 0.01 | 23.5 | 0.3 | 31.7 | 78.8 | 62.9 | 83.40 |
| Polyethylene wax (2) | 2500 | 7000 | 880 | 600 | 4.1 | 7.0 | 4.5 | 7.4 | 68.2 | 56.8 | 74.88 |
| Polyethylene wax (3) | 3000 | 8200 | 932 | 1000 | 6.7 | 4.6 | 7.5 | 5.6 | 105.0 | 95.2 | 100.93 |
| 420P | 2000 | 6400 | 930 | 700 | 6.2 | 8.3 | 5.3 | 6.8 | 112.3 | 1018 | 99.93 |
| 400P | 2200 | 6000 | 978 | 620 | 5.3 | 8.9 | 4.7 | 7.3 | 128.1 | 116.4 | 123.98 |
| A-C6 | 1800 | 6500 | 913 | 420 | 3.3 | 6.5 | 3.2 | 9.0 | 103.2 | 92.3 | 91.41 |

Physical properties of the molded articles were evaluated in the following manners.

[Evaluation of physical properties]

(Mold releasability)

A flat plate (110 mm length, 120 mm width, 2 mm thickness) was injection molded by the injection molding machine under the above conditions, cooled in the mold for the prescribed time, released from the mold by a projection pin, and the releasability in this procedure was evaluated by the following criteria.
Good: the molded article was released without resistance, and deformation was not observed
Poor: the molded article was released with the substantial resistance caused by the stickiness to the mold, and the like, and deformation was observed

(Flow mark)

A flat plate (110 mm length, 120 mm width, 2 mm thickness) was injection molded by the injection molding machine under the conditions, and the flow mark was observed.
Good: a flow mark was not observed
Poor: a flow mark was observed

(Tensile stress at break, tensile stress at yield)

A specimen (1BA specimen) was prepared by the injection molding machine under the above conditions, and the tensile stress at break and the tensile stress at yield were measured with the pulling rate of 50 mm/min in accordance with JIS K7161.

(Flexural modulus and flexural strength)

A specimen was prepared by the injection molding machine under the above conditions, and the flexural modulus and the flexural strength were measured with the distance between points of 48 mm and the testing rate of 5.0 mm/min in accordance with JIS K7171.

(Heat resistance)

A specimen was prepared by the injection molding machine under the conditions, and the Vicat softening point was measured by the A50 method in accordance with JIS K7206.

(Heat distortion temperature)

An edgewise specimen (specimen: 125 mm length, 12. 5 mm width, 3.2 mm thickness) was prepared under the conditions of the injection molding as mentioned later Examples, and the heat distortion temperature was measured with the load condition B method of 0.45 MPa and the distance between points of 100 mm in accordance with the edgewise method of JIS K7191.

(Impact resistance)

A specimen (the type-1 A notched specimen) was prepared by using the injection molding machine under the above conditions, and the Izod impact strength was measured in accordance with JIS K7110.

(Examples of polyethylene (1))

[Comparative Example 1A]

Low-density polyethylene (trade name: Mirason 403P, manufactured by Prime Polymer Co., Ltd., crystal melting temperature: 108°C, density: 921 kg/$m^3$, MI: 7.0 g/10 min) was injection molded under the following conditions to prepare the molded articles, and each physical properties were measured. The results are shown in Table 2.

[Conditions of the injection molding]

| | |
|---|---|
| Injection molding machine: | A 55-ton injection molding machine (IS55EPNi 1.5B, manufactured by Toshiba Machine Co., Ltd.) |
| Molding temperature (cylinder set temperature): | 180°C |
| Injection pressure (primary): | 35 MPa |
| Injection rate: | 80 mm/sec |
| Injection time: | 15 seconds |
| Mold temperature: | 30°C |
| Mold cooling time: | 20 seconds |

[Comparative Example 2A]

The injection molding was attempted by using the low-density polyethylene (Mirason 403P) in a similar manner to that of Comparative Example 1A except that the molding temperature was changed to 160°C. It was resulted in the short shot, and a good molded article was not obtained.

[Comparative Example 3A]

100 parts by weight of low-density polyethylene (Mirason 403P) was added by 2 parts by weight of the Ziegler polyethylene wax (trade name: Hi-WAX420P (registered trade name), manufactured by Mitsui Chemicals, Inc., ethylene content: 97 mol %, density: 930 $kg/m^3$, average molecular weight (Mn): 2,000, melt viscosity (140°C) : 700 mPa·s, A value: 8.3% by weight, B value: 6.2% by weight) prepared by using a Ziegler catalyst, and they were fully mixed in a tumbler mixer to obtain a mixture of the low-density polyethylene and the polyethylene wax.

This mixture instead of the low-density polyethylene (Mirason 403P) was injection molded in a similar manner to that of the Comparative Example 1A except that the molding temperature was changed to 160°C and the mold cooling time was changed to 15 seconds, and each of the physical properties was evaluated. The results are shown in Table 2.

[Example 1A]

The injection molding was performed in a similar manner to that of Comparative Example 3A except that 2 parts by weight of the metallocene polyethylene wax (trade name: Exellex (registered trade name) 48070BT, manufactured by Mitsui Chemicals, Inc., ethylene content: 92 mol %, density: 902 $kg/m^3$, average molecular weight (Mn) : 3,400, melt viscosity (140°C) : 1, 350 mPa·s, A value: 4.7% by weight, B value: 8.7% by weight) prepared by using a metallocene catalyst, instead of the Ziegler polyethylene wax (Hi-WAX (registered trade name) 420P) were used, and each of the physical properties was measured. The results are shown in Table 2.

[Table 2]

Table 2

| | Comparative Example 1A | Comparative Example 2A | Comparative Example 3A | Example 1A |
|---|---|---|---|---|
| Addition amount of Exellex 48070BT (parts by weight) | 0 | 0 | 0 | 2 |
| Addition amount of Hi-WAX 420P (parts by weight) | 0 | 0 | 2 | 0 |
| Molding temperature (°C) | 180 | 160 | 160 | 160 |
| Mold cooling time (seconds) | 20 | - | 15 | 15 |
| Mold releasability | Good | - | Poor | Good |
| Flow mark | Good | - | Good | Good |
| Tensile stress at break (MPa) | 18 | - | 14 | 18 |

(continued)

| | | Comparative Example 1A | Comparative Example 2A | Comparative Example 3A | Example 1A |
|---|---|---|---|---|---|
| Flexural modulus (MPa) | | 149 | - | 119 | 149 |
| Flexural strength (MPa) | | 8.8 | - | 7.0 | 8.7 |
| Vicat softening point (°C) | | 94 | - | 90 | 93 |
| Izod impact strength (J/m) | 23°C | 520 | - | 416 | 518 |

By comparing Example 1A with Comparative Examples 1A and 2A, it was observed that the injection molding was performed without impairing physical properties of the molded article when the polyethylene wax is added to the low-density polyethylene even if the molding temperature is lowered by 20°C or more as compared with the case without adding the wax. In addition, it was observed that the mold cooling time was shortened. Further, by comparing Example 1A with Comparative Example 3A, it was observed that, when the polyethylene wax prepared by using a catalyst satisfying the relationship shown by the expression (I) between the melt viscosity and the B value and the relationship shown by the expression (II) between the melt viscosity and the A value is added to the low-density polyethylene, an injection molded article having the mechanical properties better than those obtained by using a conventional wax was produced, and that the releasability from the mold is also excellent.

(Example of polyethylene (2))

[Comparative Example 1B]

High-density polyethylene (trade name: Hi-ZEX 2100JH, manufactured by Prime Polymer Co. Ltd., crystal melting point: 131°C, density: 952 kg/$m^3$, MI: 9.0 g/10 min) was injection molded under the following conditions to obtain the molded articles, and each of the physical properties were measured. The results are shown in Table 3.

[Conditions of the injection molding]

| | |
|---|---|
| Injection molding machine: | A 55-ton injection molding machine (IS55EPNi 1.5B, manufactured by Toshiba Machine Co., Ltd.) |
| Molding temperature (cylinder set temperature): | 200°C |
| Injection pressure (primary): | 35 MPa |
| Injection rate: | 80 mm/sec |
| Injection time: | 15 seconds |
| Mold temperature: | 30°C |
| Mold cooling time: | 20 seconds |

[Comparative Example 2B]

The injection molding was attempted by using the high-density polyethylene (Hi-ZEX 2100JH) in a similar manner to that of Comparative Example 1B except that the molding temperature was changed to 170°C. It was resulted in the short shot, and a good molded article was not obtained.

[Comparative Example 3B]

100 parts by weight of high-density polyethylene (Hi-ZEX 2100JH) was added by 2 parts by weight of the Ziegler polyethylene wax (trade name: Hi-WAX400P (registered trade name), manufactured by Mitsui Chemicals, Inc., ethylene content: 99 mol %, density: 978 kg/$m^3$, average molecular weight (Mn): 2,200, melt viscosity (140°C): 620 mPa·s, A value: 8.9% by weight, B value: 5.3% by weight) prepared by using a Ziegler catalyst, and they were fully mixed in a tumbler mixer to obtain a mixture of the high-density polyethylene and the polyethylene wax.

This mixture instead of the high-density polyethylene (Hi-ZEX 2100JH) was injection molded in a similar manner

to that of the Comparative Example 1B except that the molding temperature was changed to 170°C and the mold cooling time was changed to 15 seconds, and each of the physical properties was measured. The results are shown in Table 3.

[Example 1B]

The injection molding was performed in a similar manner to that of Comparative Example 3B except that 2 parts by weight of the metallocene polyethylene wax (trade name: Exellex (registered trade name) 40800T, manufactured by Mitsui Chemicals, Inc., ethylene content: 99 mol %, density: 980 kg/$m^3$, average molecular weight (Mn): 2,400, melt viscosity (140°C): 600 mPa·s, A value: 7.3% by weight, B value: 4.2% by weight) prepared by using a metallocene catalyst, instead of the Ziegler polyethylene wax (Hi-WAX (registered trade name) 400P) were used, and each of the physical properties was evaluated. The results are shown in Table 3.
[Table 3]

Table 3

| | | Comparative Example 1B | Comparative Example 2B | Comparative Example 3B | Example 1B |
|---|---|---|---|---|---|
| Addition amount of Exellex 40800BT (parts by weight) | | 0 | 0 | 0 | 2 |
| Addition amount of Hi-WAX 400P (parts by weight) | | 0 | 0 | 2 | 0 |
| Molding temperature (°C) | | 200 | 170 | 170 | 170 |
| Mold cooling time (seconds) | | 20 | - | 15 | 15 |
| Mold releasability | | Good | - | Poor | Good |
| Flow mark | | Good | - | Good | Good |
| Tensile stress at yield (MPa) | | 22 | - | 18 | 22 |
| Tensile stress at break (MPa) | | 15 | - | 13 | 14 |
| Flexural modulus (MPa) | | 846 | - | 677 | 845 |
| Flexural strength (MPa) | | 23 | - | 19 | 23 |
| Vicat softening point (°C) | | 122 | - | 118 | 122 |
| Izod impact strength (J/m) | 23°C | 62 | - | 58 | 62 |

[Comparative Example 4B]

The injection molding was performed in a similar manner to that of Comparative Example 1 except that linear polyethylene (trade name: ULTZEX 4570, manufactured by Prime Polymer Co., Ltd., crystal melting point: 127°C, density: 945 kg/$m^3$, MI: 7. 0 g/10 min) instead of high-density polyethylene (Hi-ZEX 2100JH) was used, and each of the physical properties was evaluated. The results are shown in Table 4.

[Comparative Example 5B]

The injection molding was attempted by using the linear polyethylene (ULTZEX 4570) in a similar manner to that of Comparative Example 4B except that the molding temperature was changed to 170°C. It was resulted in the short shot, and a good molded article was not obtained.

[Comparative Example 6B]

100 parts by weight of linear polyethylene (ULTZEX 4570) was added by 2 parts by weight of the Ziegler polyethylene wax (Hi-WAX (registered trade name) 420P), and they were fully mixed in a tumbler mixer to obtain a mixture of the linear polyethylene and the polyethylene wax.
This mixture instead of the linear polyethylene (ULTZEX 4570) was injection molded in a similar manner to

that of the Comparative Example 4B except that the molding temperature was changed to 170°C and the mold cooling time was changed to 15 seconds, and each of the physical properties was evaluated. The results are shown in Table 4.

[Example 2B]

The injection molding was performed in a similar manner to that of Comparative Example 6B except that 2 parts by weight of the metallocene polyethylene wax (Exellex (registered trade name) 48070BT) instead of the Ziegler polyethylene wax (Hi-WAX (registered trade name) 420P) were used, and each of the physical properties was evaluated. The results are shown in Table 4.

[Table 4]

Table 4

| | | Comparative Example 4B | Comparative Example 5B | Comparative Example 6B | Example 2B |
|---|---|---|---|---|---|
| Addition amount of Exellex 48070BT (parts by weight) | | 0 | 0 | 0 | 2 |
| Addition amount of Hi-WAX 420P (parts by weight) | | 0 | 0 | 2 | 0 |
| Molding temperature (°C) | | 200 | 170 | 170 | 170 |
| Mold cooling time (seconds) | | 20 | - | 15 | 15 |
| Mold releasability | | Good | - | Poor | Good |
| Flow mark | | Good | - | Good | Good |
| Tensile stress at yield (MPa) | | 18 | - | 14 | 17 |
| Tensile stress at break (MPa) | | 29 | - | 23 | 28 |
| Flexural modulus (MPa) | | 650 | - | 520 | 652 |
| Flexural strength (MPa) | | 19 | - | 15 | 19 |
| Vicat softening point (°C) | | 114 | - | 110 | 114 |
| Izod impact strength (J/m) | 23°C | 771 | - | 617 | 772 |

By comparing Example 1B with Comparative Examples 1B and 2B, and Example 2B with Comparative Examples 4B and 5B, it was observed that the injection molding was performed without impairing physical properties of the molded article when the polyethylene wax is added to the high-density polyethylene and the like even if the molding temperature is lowered by 30°C or more as compared with the case without adding the wax. In addition, it was observed that the mold cooling time was shortened. Further, by comparing Example 1B with Comparative Example 3B, and Example 2B with Comparative Example 6B, it was observed that, when the polyethylene wax prepared by using a catalyst satisfying the relationship shown by the expression (I) between the melt viscosity and the B value and the relationship shown by the expression (II) between the melt viscosity and the A value is added to the high-density polyethylene, an injection molded article having the mechanical properties better than those obtained by using a conventional wax was produced, and that the releasability from the mold is also excellent.

(Example of polypropylene)

[Comparative Example 1C]

Propylene block copolymer (trade name: Prime Polypro J704WA, manufactured by Prime Polymer Co. Ltd., crystal melting point: 160°C) was injection molded under the following conditions to obtain the molded articles, and each of the physical properties was measured. The results are shown in Table 5.

[Conditions of the injection molding]

| | |
|---|---|
| Injection molding machine: | A 55-ton injection molding machine (IS55EPNi 1.5B, manufactured by Toshiba Machine Co., Ltd.) |
| Molding temperature: | 220°C |
| Injection pressure: | 105 MPa |
| Mold temperature: | 40°C |
| Mold cooling time: | 20 seconds |

[Comparative Example 2C]

The injection molding was attempted by using the propylene block copolymer (Prime Polypro J704WA) in a similar manner to that of Comparative Example 1C except that the molding temperature was changed to 190°C. It was resulted in the short shot, and a good molded article was not obtained.

[Examples 1C and 2C]

100 parts by weight of propylene block copolymer (Prime Polypro J704WA) was added by 1 or 3 parts by weight of the metallocene polyethylene wax (Exellex (registered trade name) 30200BT, manufactured by Mitsui Chemicals, Inc., ethylene content: 95 mol %, density: 913 kg/$m^3$, average molecular weight (Mn): 2,000, melt viscosity (140°C): 300 mPa·s, A value: 9.3% by weight, B value: 2.2% by weight) prepared by using a metallocene catalyst, and they were fully mixed in a tumbler mixer to obtain a mixture of the polypropylene and the polyethylene wax.

This mixture instead of the propylene block copolymer (Prime Polypro J704WA) was injection molded in a similar manner to that of Comparative Example 1C except that the molding temperature was changed to 190°C and the mold cooling time was changed to 15 seconds, and each of the physical properties was evaluated. The results are shown in Table 5.

[Table 5]

Table 5

| | | Comparative Example 1C | Comparative Example 2C | Example 1C | Example 2C |
|---|---|---|---|---|---|
| Addition amount of Exellex 30200BT (parts by weight) | | 0 | 0 | 1 | 3 |
| Molding temperature (°C) | | 220 | 190 | 190 | 190 |
| Mold cooling time (seconds) | | 20 | - | 15 | 15 |
| Mold releasability | | Good | - | Good | Good |
| Flow mark | | Good | - | Good | Good |
| Tensile stress at yield (MPa) | | 32 | - | 31 | 31 |
| Flexural modulus (MPa) | | 1400 | - | 1410 | 1390 |
| Flexural strength (MPa) | | 44 | - | 43 | 43 |
| Vicat softening point (°C) | | 153 | - | 150 | 149 |
| Izod impact strength (J/m) | -30°C | 38 | - | 35 | 36 |
| | 23°C | 95 | - | 97 | 94 |

[Comparative Example 3C]

Propylene homopolymer (trade name: Prime Polypro J106G, manufactured by Prime Polymer Co. Ltd., crystal melting point: 160°C) was injection molded under the following conditions to obtain the molded article, and each of the physicalproperties was measured. The results are shown in Table 6.

[Conditions of the injection molding]

| | |
|---|---|
| Injection molding machine: | A 55-ton injection molding machine (IS55EPNi 1.5B, manufactured by Toshiba Machine Co., Ltd.) |
| Molding temperature (cylinder set temperature): | 220°C |
| Injection pressure (primary): | 20 MPa |
| Injection rate: | 80 mm/sec |
| Injection time: | 15 seconds |
| Mold temperature: | 40°C |
| Mold cooling time: | 20 seconds |

[Comparative Example 4C]

The injection molding was attempted by using the propylene homopolymer (Prime Polypro J106G) in a similar manner to that of Comparative Example 3C except that the molding temperature was changed to 190°C. It was resulted in the short shot, and a good molded article was not obtained.

[Comparative Example 5C]

100 parts by weight of propylene homopolymer (Prime Polypro J106G) was added by 2 parts by weight of the Ziegler polyethylene wax (Hi-WAX (registered trade name) 420P, manufactured by Mitsui Chemicals, Inc., ethylene content: 97 mol %, density: 930 kg/m$^3$, average molecular weight (Mn) : 2, 000, melt viscosity (140°C) : 700 mPa·s, A value: 8.3% by weight, B value: 6.2% by weight) prepared by using a Ziegler catalyst, and they were fully mixed in a tumbler mixer to obtain a mixture of the polypropylene and the polyethylene wax.
This mixture instead of the propylene homopolymer (Prime Polypro J106G) was injection molded in a similar manner to that of Comparative Example 3C except that the molding temperature was changed to 190°C and the mold cooling time was changed to 15 seconds, and each of the physical properties was evaluated. The results are shown in Table 6.

[Example 3C]

The injection molding was performed in a similar manner to that of Comparative Example 5C except that 2 parts by weight of the metallocene polyethylene wax (Exellex (registered trade name) 30200BT) instead of the Ziegler polyethylene wax (Hi-WAX 420P) were used, and each of the physical properties was evaluated. The results are shown in Table 6.

[Example 4C]

The injection molding was performed in a similar manner to that of Example 3 except that 2 parts by weight of the metallocene polyethylene wax (trade name: Exellex (registered trade name) 48070BT, manufactured by Mitsui Chemicals, Inc., ethylene content: 92 mol %, density: 902 kg/m$^3$, average molecular weight (Mn): 3,400, melt viscosity (140°C): 1,350 mPa·s, A value: 4.7% by weight, B value: 8.7% by weight) prepared by using the metallocene catalyst, instead of the metallocene polyethylene wax (Exellex (registered trade name) 30200BT), were used, and each of the physical properties was measured. The results are shown in Table 6.
[Table 6]

Table 6

| | Comparative Example 3C | Comparative Example 4C | Comparative Example 5C | Example 3C | Example 4C |
|---|---|---|---|---|---|
| Addition amount of Exellex 30200BT (parts by weight) | 0 | 0 | 0 | 2 | 0 |
| Addition amount of Exellex 48070BT (parts by weight) | 0 | 0 | 0 | 0 | 2 |

(continued)

| | | Comparative Example 3C | Comparative Example 4C | Comparative Example 5C | Example 3C | Example 4C |
|---|---|---|---|---|---|---|
| Addition amount of Hi-WAX 420P (parts by weight) | | 0 | 0 | 2 | 0 | 0 |
| Molding temperature (°C) | | 220 | 190 | 190 | 190 | 190 |
| Mold cooling time (seconds) | | 20 | - | 15 | 15 | 15 |
| Mold releasability | | Good | - | Poor | Good | Good |
| Flow mark | | Good | - | Good | Good | Good |
| Tensile stress at yield (MPa) | | 37 | - | 30 | 36 | 36 |
| Flexural modulus (MPa) | | 1590 | - | 1270 | 1580 | 1580 |
| Flexural strength (MPa) | | 47 | - | 38 | 46 | 46 |
| Heat distortion temperature (°C) | 0.45MPa | 96 | - | 93 | 95 | 96 |
| | 1.81MPa | 59 | - | 55 | 58 | 58 |
| Izod impact strength (J/m) | 23°C | 30 | - | 25 | 29 | 29 |

[Comparative Example 6C]

The injection molding was performed in a similar manner to that of Comparative Example 3C except that the propylene random copolymer (trade name: Prime Polypro J226E, manufactured by Prime Polymer Co., Ltd., crystal melting temperature: 160°C) instead of the propylene homopolymer (trade name: Prime Polypro J106G) was used, and each of the physical properties was evaluated. The results are shown in Table 7.

[Comparative Example 7C]

The injection molding was attempted by using the propylene random copolymer (Prime Polypro J226E) in a similar manner to that of Comparative Example 6C except that the molding temperature was changed to 190°C. It was resulted in the short shot, and a good molded article was not obtained.

[Comparative Example 8C]

100 parts by weight of the propylene random copolymer (Prime Polypro J226E) was added by 2 parts by weight of the Ziegler polyethylene wax (Hi-WAX (registered trade name) 420P) prepared by using a Ziegler catalyst, and they were fully mixed in a tumbler mixer to obtain a mixture of the polypropylene and the polyethylene wax.

This mixture instead of the propylene random copolymer (Prime Polypro J226E) was injection molded in a similar manner to that of the Comparative Example 6 except that the molding temperature was changed to 190°C and the mold cooling time was changed to 15 seconds, and each of the physical properties was evaluated. The results are shown in Table 7.

[Example 5C]

The injection molding was performed in a similar manner to that of Comparative Example 8C except that 2 parts by weight of the metallocene polyethylene wax (Exellex (registered trade name) 30200BT) instead of the Ziegler polyethylene wax (Hi-WAX (registered trade name) 420P) were used, and each of the physical properties was evaluated. The results are shown in Table 7.

[Example 6C]

The injection molding was performed in a similar manner to that of Example 5C except that 2 parts by weight of the metallocene polyethylene wax (Exellex (registered trade name) 48070BT) instead of the metallocene polyethylene wax (Exellex (registered trade name) 30200BT) were used, and each of the physical properties was evaluated. The results are shown in Table 7.

[Table 7]

Table 7

| | | Comparative Example 6C | Comparative Example 7C | Comparative Example 8C | Example 5C | Example 6C |
|---|---|---|---|---|---|---|
| Addition amount of Exellex 30200BT (parts by mass) | | 0 | 0 | 0 | 2 | 0 |
| Addition amount of Exellex 48070BT (parts by mass) | | 0 | 0 | 0 | 0 | 2 |
| Addition amount of Hi-WAX 420P (parts by mass) | | 0 | 0 | 2 | 0 | 0 |
| Molding temperature (°C) | | 220 | 190 | 190 | 190 | 190 |
| Mold cooling time (seconds) | | 20 | - | 15 | 15 | 15 |
| Mold releasability | | Good | - | Poor | Good | Good |
| Flow mark | | Good | - | Good | Good | Good |
| Tensile stress at yield (MPa) | | 32 | - | 26 | 31 | 31 |
| Flexural modulus (MPa) | | 1170 | - | 940 | 1160 | 1170 |
| Flexural strength (MPa) | | 60 | - | 48 | 58 | 58 |
| Heat distortion temperature (°C) | 0.45MPa | 79 | - | 75 | 79 | 78 |
| | 1.81MPa | 53 | - | 50 | 53 | 53 |
| Izod impact strength (J/m) | 23°C | 61 | - | 50 | 59 | 60 |
| | -20°C | 21 | - | 15 | 21 | 21 |

By comparing Examples 1C and 2C with Comparative Examples 1C and 2C, Examples 3C and 4C with Comparative Examples 3C and 4C, and Examples 5C and 6C with the Comparative Examples 6C and 7C, it was observed that the injection molding was performed without impairing physical properties of the molded article when the polyethylene wax is added to the polypropylenes even if the molding temperature is lowered by 30°C as compared with the case without adding the wax. In addition, it was observed that the mold cooling time was shortened. Further, by comparing Examples 3C and 4C with Comparative Example 5C, and Examples 5C and 6C with Comparative Example 8C, it was observed that, when the polyethylene wax prepared by using a catalyst satisfying the relationship shown by the expression (I) between the melt viscosity and the B value and the relationship shown by the expression (II) between the melt viscosity and the A value is added to the polypropylene, an injection molded article having the mechanical properties better than those obtained by using a conventional wax was produced, and that the releasability from the mold is also excellent.

(Example of polypropylene resin mixture (1))

[Example 1D]

80 parts by weight of polypropylene resin (Prime Polypro J704UG: propylene block copolymer, manufactured by Prime Polymer Co., Ltd., density: 910 (kg/$m^3$), MI: 5.0 g/10 min), 20 parts by weight of ethylene/$\alpha$-olefin random copolymer [an olefinic elastomer] (Tafmer A1050, manufactured by Mitsui Chemicals, Inc., density: 860 (kg/$m^3$), MI: 1.2 g/10 min (at 190°C under the test load of 21.18 N), and 2 parts by weight of the metallocene polyethylene wax (Exellex

30200BT, manufactured by Mitsui Chemicals, Inc., density: 913 (kg/$m^3$), Mn: 2,000, A value: 9.3 (% by weight), B value: 2.2 (% by weight), melt viscosity: 300 (mPa·s)) were mixed. The obtained mixture was added into the injection molding machine (IS55EPNi 1.5A, manufactured by Toshiba Machine Co., Ltd.) set at the cylinder set temperature of 190°C and the mold temperature of 40°C, and injection molded with the injection pressure (primary) of 40 MPa, the injection rate of 80 mm/sec, the injection time of 10 seconds and the mold cooling time of 15 seconds. The results are shown in Table 8.

[Example 2D]

The injection molding was performed in a similar manner to that in Example 1D except that the polyethylene wax was changed to the metallocene polyethylene wax (Exellex 48070BT, manufactured by Mitsui Chemicals, Inc., density: 902 (kg/$m^3$), Mn: 3,400, A value: 4.7 (% by weight), B value: 8.7 (% by weight), melt viscosity: 1,350 (mPa·s)). The results are shown in Table 8.

[Example 3D]

The injection molding was performed in a similar manner to that in Example 1D except that the polyethylene wax was changed to the polyethylene wax (1) (density: 897 (kg/$m^3$), Mn: 800, A value: 23.5 (% by weight), B value: 0.01 (% by weight), melt viscosity: 40 (mPa·s)). The results are shown in Table 8.

[Example 4D]

The injection molding was performed in a similar manner to that in Example 1D except that the polyethylene wax was changed to the polyethylene wax (2) (density: 880 (kg/$m^3$), Mn: 2,500, A value: 7.0 (% by weight), B value: 4.1 (% by weight), melt viscosity: 600 (mPa·s)). The results are shown in Table 8.

[Example 5D]

The injection molding was performed in a similar manner to that in Example 1D except that the amount of the metallocene polyethylene wax (Exellex 48070BT, manufactured by Mitsui Chemicals, Inc.) was changed to 1 part by weight. The results are shown in Table 8.

[Example 6D]

The injection molding was performed in a similar manner to that in Example 1D except that the amount of the metallocene polyethylene wax (Exellex 48070BT, manufactured by Mitsui Chemicals, Inc.) was changed to 5 parts by weight. The results are shown in Table 8.

[Comparative Example 1D]

80 parts by weight of polypropylene resin (Prime Polypro J704UG: propylene block copolymer, manufactured by Prime Polymer Co., Ltd., density: 910 (kg/$m^3$), MI: 5.0 g/10 min), and 20 parts by weight of ethylene/$\alpha$-olefin random copolymer [an olefinic elastomer] (Tafmer A1050, manufactured by Mitsui Chemicals, Inc., density: 860 (kg/$m^3$), MI: 1.2 g/10 min (at 190°C under the test load of 21.18 N) were mixed. Then, the obtained mixture was added into the injection molding machine (IS55EPNi 1.5A, manufactured by Toshiba Machine Co. , Ltd.) set at the cylinder set temperature of 210°C and the mold temperature of 40°C and injection molded with the injection pressure (primary) of 40 MPa, the injection rate of 80 mm/sec, the injection time of 10 seconds, and the mold cooling time of 20 seconds. The results are shown in Table 8.

[Comparative Example 2D]

80 parts by weight of polypropylene resin (Prime Polypro J704UG: propylene block copolymer, manufactured by Prime Polymer Co., Ltd., density: 910 (kg/$m^3$), MI: 5.0 g/10 min), and 20 parts by weight of ethylene/$\alpha$-olefin random copolymer [an olefinic elastomer] (Tafmer A1050, manufactured by Mitsui Chemicals, Inc., density: 860 (kg/$m^3$), MI: 1.2 g/10 min (at 190°C under the test load of 21.18 N) were mixed. Then, the obtained mixture was added into the injection molding machine (IS55EPNi 1.5A, manufactured by Toshiba Machine Co., Ltd.) set at the cylinder set temperature of 190°C and the mold temperature of 40°C and attempted to be injection molded with the injection pressure (primary) of 40 MPa, the injection rate of 80 mm/sec, the injection time of 10 seconds, and the mold cooling time of 15 seconds, but the molded article was not obtained.

[Comparative Example 3D]

The injection molding was performed in a similar manner to that of Example 1D except that the polyethylene wax was changed to the polyethylene wax (3) (density: 932 (kg/$m^3$), Mn: 3,000, A value: 4.6 (% by weight), B value: 6.7 (% by weight), melt viscosity: 1,000 (mPa·s)). The results are shown in Table 8. When comparing with the polyethylene resin composition without adding the wax of Comparative Example 1D, the tensile stress at yield, the flexural modulus and the flexural strength were all decreased, and further the Izod impact strength was also decreased.

[Comparative Example 4D]

The injection molding was performed in a similar manner to that of Example 1D except that the polyethylene wax was changed to the polyethylene wax (Hi-WAX 420P, manufactured by Mitsui Chemicals, Inc., density: 930 (kg/$m^3$), Mn: 2,000, A value: 8.3 (% by weight), B value: 6.2 (% by weight), melt viscosity: 700 (mPa·s)). The results are shown in Table 8. When comparing with the polyethylene resin composition without adding the wax of Comparative Example 1D, the tensile stress at yield, the flexural modulus and the flexural strength were all decreased, and the heat distortion temperature and the Izod impact strength were also decreased. In addition, the releasability was deteriorated and further the moldability was not good.

[Comparative Example 5D]

The injection molding was performed in a similar manner to that in Example 1D except that the polyethylene wax was changed to the polyethylene wax (A-C6, manufactured by Honeywell Inc., density: 913 (kg/$m^3$), Mn: 1,800, A value: 6.5 (% by weight), B value: 3.3 (% by weight), melt viscosity: 420 (mPa·s)). The results are shown in Table 8. When comparing with the polyethylene resin composition without adding the wax of Comparative Example 1D, the tensile stress at yield, the flexural modulus and the flexural strength were all decreased, and the heat distortion temperature and the Izod impact strength were also decreased.

[Table 8]

Table 8

| Example/Comparative Example No. | | Example 1D | Example 2D | Example 3D | Example 4D | Example 5D | Example 6D | Comparative Example 1D | Comparative Example 2D | Comparative Example 3D | Comparative Example 4D | Comparative Example 5D |
|---|---|---|---|---|---|---|---|---|---|---|---|---|
| Polypropylene | Type | J704UG | J704UG | J704UG | J704UG | J704UG | J704UG | J704UG | J704UG | J704UG | J704UG | J704UG |
| | Amount | 80 | 80 | 80 | 80 | 80 | 80 | 80 | 80 | 80 | 80 | 80 |
| Elastomer | Type | A1050 | A1050 | A1050 | A1050 | A1050 | A1050 | A1050 | A1050 | A1050 | A1050 | A1050 |
| | Amount | 20 | 20 | 20 | 20 | 20 | 20 | 20 | 20 | 20 | 20 | 20 |
| Polyethylene wax | Type | 30200BT | 48070BT | Polyethylene wax (1) | Polyethylene wax (2) | 48070BT | 48070BT | | | Polyethylene wax (3) | 420P | A-C6 |
| | Amount | 2 | 2 | 2 | 2 | 1 | 5 | | | 2 | 2 | 2 |
| Molding temperature (°C) | | 190 | 190 | 190 | 190 | 190 | 190 | 210 | 190 | 190 | 190 | 190 |
| Mold cooling time (seconds) | | 15 | 15 | 15 | 15 | 15 | 15 | 20 | 15.0 | 15.0 | 15.0 | 15 |
| Mold releasability | | Good | Good | Good | Good | Good | Good | Good | - | Good | Poor | Good |
| Flow mark | | Good | Good | Good | Good | Good | Good | Good | - | Good | Good | Good |
| Tensile stress at yield (MPa) | | 25.1 | 25.3 | 25.6 | 24.7 | 25.4 | 24.9 | 25.5 | - | 21.9 | 21.3 | 22.2 |
| Flexural modulus (MPa) | | 998 | 1000 | 1000 | 980 | 1000 | 997 | 1000 | - | 920 | 900 | 940 |
| Flexural strength (MPa) | | 26.4 | 27.5 | 27.7 | 26.3 | 27.2 | 26.4 | 27.0 | - | 22.8 | 21.3 | 24.5 |
| Heat distortion temperature (°C) 0.45MPa | | 89 | 89 | 89 | 88 | 89 | 89 | 88 | - | 89 | 86 | 87 |
| Izod impact strength (J/m) | | 665 | 665 | 675 | 670 | 665 | 675 | 665 | - | 610 | 550 | 600 |

[Example 7D]

80 parts by weight of polypropylene resin (Prime Polypro J704UG: propylene block copolymer, manufactured by Prime Polymer Co., Ltd., density: 910 (kg/m$^3$), MI: 5.0 g/10 min), 20 parts by weight of propylene/$\alpha$-olefin random copolymer [an olefinic elastomer] (Tafmer XM7070, manufactured by Mitsui Chemicals, Inc., density: 900 (kg/m$^3$), MI: 7.0 g/10 min (at 230°C under the test load of 21.18 N), and 2 parts by weight of the metallocene polyethylene wax (Exellex 30200BT, manufactured by Mitsui Chemicals, Inc., density: 913 (kg/m$^3$), Mn: 2,000, A value: 9.3 (% by weight), B value: 2.2(% by weight), melt viscosity: 300 (mPa·s)) were mixed. Then, the obtained mixture was added into the injection molding machine (IS55EPNi 1.5A, manufactured by Toshiba Machine Co., Ltd.) set at the cylinder set temperature of 190°C and the mold temperature of 40°C, and injection molded with the injection pressure (primary) of 40 MPa, the injection rate of 80 mm/sec, the injection time of 10 seconds, and the mold cooling time of 15 seconds. The results are shown in Table 9.

[Example 8D]

The injection molding was performed in a similar manner to that in Example 7D except that the polyethylene wax was changed to the metallocene polyethylene wax (Exellex 48070BT, manufactured by Mitsui Chemicals, Inc., density: 902 (kg/m$^3$), Mn: 3,400, A value: 4.7 (% by weight), B value: 8.7 (% by weight), melt viscosity: 1,350 (mPa·s)). The results are shown in Table 9.

[Example 9D]

The injection molding was performed in a similar manner to that in Example 7D except that the polyethylene wax was changed to the polyethylene wax (1) (density: 897 (kg/m$^3$), Mn: 800, A value: 23.5 (% by weight), B value: 0.01 (% by weight), melt viscosity: 40 (mPa·s)). The results are shown in Table 9.

[Example 10D]

The injection molding was performed in a similar manner to that in Example 7D except that the polyethylene wax was changed to the polyethylene wax (2) (density: 880 (kg/m$^3$), Mn: 2,500, A value: 7.0 (% by weight), B value: 4.1 (% by weight), melt viscosity: 600 (mPa·s)). The results are shown in Table 9.

[Example 11D]

The injection molding was performed in a similar manner to that in Example 7D except that the amount of the metallocene polyethylene wax (Exellex 48070BT, manufactured by Mitsui Chemicals, Inc.) was changed to 1 part by weight. The results are shown in Table 9.

[Example 12D]

The injection molding was performed in a similar manner to that in Example 7D except that the amount of the metallocene polyethylene wax (Exellex 48070BT, manufactured by Mitsui Chemicals, Inc.) was changed to 5 parts by weight. The results are shown in Table 9.

[Comparative Example 6D]

80 parts by weight of polypropylene resin (Prime Polypro J704UG: propylene block copolymer, manufactured by Prime Polymer Co., Ltd., density: 910 (kg/m$^3$), MI: 5.0 g/10 min), and 20 parts by weight of propylene/$\alpha$-olefin random copolymer [an olefinic elastomer] (Tafmer XM7070, manufactured by Mitsui Chemicals, Inc., density: 900 (kg/m$^3$), MI: 7.0 g/10 min (at 230°C under the test load of 21.18 N) were mixed. Then, the obtained mixture was added into the injection molding machine (IS55EPNi 1.5A, manufactured by Toshiba Machine Co., Ltd.) set at the cylinder set temperature of 210°C and the mold temperature of 40°C, and injection molded with the injection pressure (primary) of 40 MPa, the injection rate of 80 mm/sec, the injection time of 10 seconds, and the mold cooling time of 20 seconds. The results are shown in Table 9.

[Comparative Example 7D]

80 parts by weight of polypropylene resin (Prime Polypro J704UG: propylene block copolymer, manufactured

by Prime Polymer Co., Ltd., density: 910 (kg/$m^3$), MI: 5.0 g/10 min), and 20 parts by weight of propylene/α-olefin random copolymer [an olefinic elastomer] (Tafmer XM7070, manufactured by Mitsui Chemicals, Inc., density: 900 (kg/$m^3$), MI: 7.0 g/10 min (at 230°C under the test load of 21.18 N) were mixed. Then, the obtained mixture was added into the injection molding machine (IS55EPNi 1.5A, manufactured by Toshiba Machine Co., Ltd.) set at the cylinder set temperature of 190°C and the mold temperature of 40°C and attempted to be injection molded with the injection pressure (primary) of 40 MPa, the injection rate of 80 mm/sec, the injection time of 10 seconds, and the mold cooling time of 15 seconds, but the molded article was not obtained.

[Comparative Example 8D]

The injection molding was performed in a similar manner to that of Example 7D except that the polyethylene wax was changed to the polyethylene wax (3) (density: 932 (kg/$m^3$), Mn: 3,000, A value: 4.6 (% by weight), B value: 6.7 (% by weight), melt viscosity: 1,000 (mPa·s)). The results are shown in Table 9. When comparing with the polyethylene resin composition without adding the wax of Comparative Example 6D, the tensile stress at yield, the flexural modulus and the flexural strength were all decreased, and the heat distortion temperature and the Izod impact strength were also decreased.

[Comparative Example 9D]

The injection molding was performed in a similar manner to that in Example 7D except that the polyethylene wax was changed to the polyethylene wax (Hi-WAX 420P, manufactured by Mitsui Chemicals, Inc., density: 930 (kg/$m^3$), Mn: 2,000, A value: 8.3 (% by weight), B value: 6.2 (% by weight), melt viscosity: 700 (mPa·s)). The results are shown in Table 9. When comparing with the polyethylene resin composition without adding the wax of Comparative Example 6D, the tensile stress at yield, the flexural modulus and the flexural strength were all decreased, and the heat distortion temperature and the Izod impact strength were also decreased. In addition, the releasability was deteriorated and further the moldability was not good.

[Comparative Example 10D]

The injection molding was performed in a similar manner to that in Example 7D except that the polyethylene wax was changed to the polyethylene wax (A-C6, manufactured by Honeywell Inc., density: 913 (kg/$m^3$), Mn: 1,800, A value: 6.5 (% by weight), B value: 3.3 (% by weight), melt viscosity: 420 (mPa·s)). The results are shown in Table 9. When comparing with the polyethylene resin composition without adding the wax of Comparative Example 6D, the tensile stress at yield, the flexural modulus and the flexural strength were all decreased, and the heat distortion temperature and the Izod impact strength were also decreased.

[Table 9]

Table 9

| Example/Comparative Example No | | Example 7D | Example 8D | Example 9D | Example 10D | Example 11D | Example 12D | Comparative Example 6D | Comparative Example 7D | Comparative Example 8D | Comparative Example 9D | Comparative Example 10D |
|---|---|---|---|---|---|---|---|---|---|---|---|---|
| Polypropylene | Type | J704UG | J704UG | J704UG | J704UG | J704UG | J704UG | J704UG | J704UG | J704UG | J704UG | J704UG |
| | Amount | 80 | 80 | 80 | 80 | 80 | 80 | 80 | 80 | 80 | 80 | 80 |
| Elastomer | Type | XM7070 | XM7070 | XM7070 | XM7070 | XM7070 | XM7070 | XM7070 | XM7070 | XM7070 | XM7070 | XM7070 |
| | Amount | 20 | 20 | 20 | 20 | 20 | 20 | 20 | 20 | 20 | 20 | 20 |
| Polyethylene wax | Type | 30200BT | 48070BT | Polyethylene wax (1) | Polyethylene wax (2) | 48070BT | 48070BT | | | Polyethylene wax (3) | 420P | A-C6 |
| | Amount | 2 | 2 | 2 | 2 | 1 | 5 | | | 2 | 2 | 2 |
| Molding temperature (°C) | | 190 | 190 | 190 | 190 | 190 | 190 | 210 | 190 | 190 | 190 | 190 |
| Mold cooling time (seconds) | | 15 | 15 | 15 | 15 | 15 | 15 | 20 | 15 | 15 | 15 | 15 |
| Mold releasability | | Good | Good | Good | Good | Good | Good | Good | - | Good | Poor | Good |
| Flow mark | | Good | Good | Good | Good | Good | Good | Good | - | Good | Good | Good |
| Tensile stress at yield (MPa) | | 22.2 | 22.3 | 22.8 | 22.1 | 22.7 | 21.8 | 22.6 | - | 20.3 | 18.5 | 20.8 |
| Flexural modulus (MPa) | | 950 | 950 | 960 | 940 | 950 | 940 | 950 | - | 900 | 900 | 910 |
| Flexural strength (MPa) | | 24.6 | 24.6 | 24.8 | 24.2 | 25.0 | 24.1 | 25.0 | - | 21.4 | 20.5 | 22.5 |
| Heat distortion temperature (°C) 0.45MPa | | 86 | 85 | 86 | 86 | 88 | 87 | 88 | - | 86 | 85 | 85 |
| Izod impact strength (J/m) | | 640 | 640 | 650 | 650 | 640 | 650 | 640 | - | 610 | 600 | 630 |

## Claims

1. A method for producing a molded article by injection molding of a mixture containing a polyolefin resin (A) and a polyethylene wax (B) having a density of 890 to 980 (kg/$m^3$) as measured by a density gradient tube method in accordance with JIS K7112 and a number average molecular weight (Mn) of 500 to 4,000 in terms of polyethylene as measured by gel permeation chromatography (GPC) and satisfying the relationship shown by the following expression (I):

$$B \leq 0.0075 \times K \ldots (I),$$

wherein B is a content ratio (% by weight) of components having a molecular weight of 20,000 or more in terms of polyethylene in the polyethylene wax as measured by gel permeation chromatography, and K is a melt viscosity (mPa·s) of the polyethylene wax at 140°C.

2. The method for producing a molded article by injection molding according to claim 1, wherein the polyethylene wax (B) further satisfies the relationship shown by the following expression (II):

$$A \leq 230 \times K^{(-0.537)} \ldots (II),$$

wherein A is a content ratio (% by weight) of components having a molecular weight of 1,000 or less in terms of polyethylene in the polyethylene wax as measured by gel permeation chromatography, and K is a melt viscosity (mPa·s) of the polyethylene wax at 140°C.

3. The method for producing a molded article by injection molding according to claim 1 or 2, wherein the polyolefin resin (A) is polyethylene having a density of 900 (kg/$m^3$) or more to less than 940 (kg/$m^3$) as measured by a density gradient tube method in accordance with JIS K7112 and an MI of 0.01 to 100 g/10 min as measured at 190°C under a test load of 21.18 N in accordance with JIS K7210.

4. The method for producing a molded article by injection molding according to claim 1 or 2, wherein the polyolefin resin (A) is polyethylene having a density of 940 to 980 (kg/$m^3$) as measured by a density gradient tube method in accordance with JIS K7112 and an MI of 0.01 to 100 g/10 min as measured at 190°C under a test load of 21.18 N in accordance with JIS K7210, and the number average molecular weight (Mn) of the polyethylene wax (B) is 500 to 3,000 in terms of polyethylene as measured by gel permeation chromatography (GPC).

5. The method for producing a molded article by injection molding according to claim 1 or 2, wherein the polyolefin resin (A) is polypropylene.

6. The method for producing a molded article by injection molding according to claim 1 or 2, wherein the polyolefin resin (A) is a resin mixture containing 55 to 95% by weight of polypropylene and 5 to 45% by weight of an olefinic elastomer based on 100% by weight of the total of the polypropylene and the olefinic elastomer, and having a density of the polyethylene wax (B) as measured by a density gradient tube method in accordance with JIS K7112 is 880 to 920 (kg/$m^3$).

7. The method for producing a molded article by injection molding according to claim 1 or 2, wherein 0.01 to 10 parts by weight of the polyethylene wax (B) are used relative to 100 parts by weight of the polyethylene (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H05199380492 B
- JP 2003528948 A
- JP H04268307 B
- JP 2004175707 A
- WO 2001027124 A
- WO 2004029062 A
- WO 2004083265 A
- JP H0278687 A
- JP H02167305 B
- JP H0224701 B
- JP H03103407 B
- US 4960878 A
- US 5041584 A
- JP H01501950 B
- JP H01502036 B
- JP H03179005 B
- JP H03179006 B
- JP H03207703 B
- JP H03207704 B
- US 5321106 A
- JP 2004051676 A